(19) Europäisches Patentamt
European Patent Office
Office européen des brevets

(11) **EP 3 783 887 A1**

(12) **EUROPEAN PATENT APPLICATION**
published in accordance with Art. 153(4) EPC

(43) Date of publication:
**24.02.2021 Bulletin 2021/08**

(21) Application number: **19789348.0**

(22) Date of filing: **15.04.2019**

(51) Int Cl.:
*H04N 13/178* (2018.01)     *H04N 13/183* (2018.01)
*H04N 13/194* (2018.01)     *H04N 13/271* (2018.01)
*H04N 13/344* (2018.01)     *H04N 13/361* (2018.01)

(86) International application number:
**PCT/JP2019/016232**

(87) International publication number:
**WO 2019/203207 (24.10.2019 Gazette 2019/43)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **19.04.2018  JP 2018080978**

(71) Applicant: **Sony Corporation
108-0075 Tokyo (JP)**

(72) Inventor: **TSUKAGOSHI, Ikuo
Tokyo 108-0075 (JP)**

(74) Representative: **2SPL Patentanwälte PartG mbB
Postfach 15 17 23
80050 München (DE)**

(54) **RECEPTION DEVICE, RECEPTION METHOD, TRANSMISSION DEVICE, AND TRANSMISSION METHOD**

(57)     Depth control when superimposing and displaying superimposition information by using depth information transmitted efficiently is easily implemented.

A video stream obtained by encoding image data of a wide viewing angle image for each of left-eye and right-eye pictures, and depth meta information including position information and a representative depth value of the predetermined number of angle areas in the wide viewing angle image for each picture are received. Left-eye and right-eye display area image data is extracted from the image data of the wide viewing angle image for each of the left-eye and right-eye pictures obtained by decoding the video stream. Superimposition information data is superimposed on the left-eye and right-eye display area image data for output. When superimposing the superimposition information data on the left-eye and right-eye display area image data, parallax is given on the basis of the depth meta information.

*FIG. 25*

DISPLAY AREA          SUBTITLE

EP 3 783 887 A1

**Description**

TECHNICAL FIELD

The present technology relates to a reception device, a reception method, a transmission device, and a transmission method, and more particularly, the present technology relates to a reception device and the like that VR-displays a stereoscopic image.

BACKGROUND ART

In a case where a stereoscopic image is virtual reality (VR)-displayed, it is important for stereoscopic vision to superimpose subtitles and graphics at a position closer to an object displayed interactively. For example, Patent Document 1 shows a technology to transmit depth information for each pixel or evenly divided block of an image together with image data of left and right eye images, and to use the depth information for depth control when superimposing and displaying subtitles and graphics on the receiving side. However, for a wide viewing angle image, it is necessary to secure a large transmission band for transmitting depth information.

CITATION LIST

PATENT DOCUMENT

Patent Document 1: WO 2013/105401

SUMMARY OF THE INVENTION

PROBLEMS TO BE SOLVED BY THE INVENTION

An object of the present technology is to easily implement depth control when superimposing and displaying superimposition information by using depth information that is efficiently transmitted.

SOLUTIONS TO PROBLEMS

A concept of the present technology is a reception device including:

a reception unit configured to receive a video stream obtained by encoding image data of a wide viewing angle image for each of left-eye and right-eye pictures, and depth meta information including position information and a representative depth value of a predetermined number of angle areas in the wide viewing angle image for each of the pictures; and
a processing unit configured to extract left-eye and right-eye display area image data from the image data of a wide viewing angle image for each of the left-eye and right-eye pictures obtained by decoding the video stream and to superimpose superimposition information data on the left-eye and right-eye display area image data for output,
in which when superimposing the superimposition information data on the left-eye and right-eye display area image data, the processing unit gives parallax to the superimposition information data to be superimposed on each of the left-eye and right-eye display area image data on the basis of the depth meta information.

In the present technology, the reception unit receives a video stream obtained by encoding image data of a wide viewing angle image for each of left-eye and right-eye pictures, and depth meta information including position information and a representative depth value of a predetermined number of angle areas in the wide viewing angle image for each of the pictures. For example, the reception unit may receive the depth meta information for each of the pictures by using a timed metadata stream associated with the video stream. Furthermore, for example, the reception unit may receive the depth meta information for each of the pictures, the depth meta information being inserted into the video stream. Furthermore, for example, the position information on the angle areas may be given as offset information based on a position of a predetermined viewpoint.

The left-eye and right-eye display area image data is extracted by the processing unit from the image data of a wide viewing angle image for each of the left-eye and right-eye pictures obtained by decoding the video stream. The superimposition information data is superimposed on the left-eye and right-eye display area image data for output. Here, when superimposing the superimposition information data on the left-eye and right-eye display area image data, on the basis of the depth meta information, parallax is added to the superimposition information display data that is superimposed on each of the left-eye and right-eye display area image data. For example, the superimposition information may include subtitles and/or graphics.

For example, when superimposing the superimposition information data on the left-eye and right-eye display area image data, the processing unit may give the parallax on the basis of a minimum value of the representative depth value of the predetermined number of areas corresponding to a superimposition range, the representative depth value being included in the depth meta information. Furthermore, for example, the depth meta information may further include position information indicating which position in the areas the representative depth value of the predetermined number of angle areas relate to. When superimposing the superimposition information data on the left-eye and right-eye display area image data, the processing unit may give the parallax on the basis of the representative depth value of the predetermined number of areas corresponding to the superimposition range and the position information, the representative depth value being included in the depth meta information. Furthermore, the depth meta information may further include a depth value corresponding to depth of a screen as a reference for the depth value.

Furthermore, for example, a display unit may be included that displays a three-dimensional image on the basis of the left-eye and right-eye display area image data on which the superimposition information data is superimposed. In this case, for example, the display unit may include a head mounted display.

In this way, in the present technology, when superimposing the superimposition information data on the left-eye and right-eye display area image data, parallax is given to the superimposition information data superimposed on each of the left-eye and right-eye display area image data on the basis of the depth meta information including position information and a representative depth value of the predetermined number of angle areas in the wide viewing angle image. Therefore, depth control when superimposing and displaying subtitles and graphics by using depth information that is efficiently transmitted can be easily implemented.

Furthermore, another concept of the present technology is
a transmission device including:

a transmission unit configured to transmit a video stream obtained by encoding image data of a wide viewing angle image for each of left-eye and right-eye pictures and depth meta information for each of the pictures,
in which the depth meta information includes position information and a representative depth value of a predetermined number of angle areas in the wide viewing angle image.

In the present technology, the transmission unit transmits the video stream obtained by encoding image data of a wide viewing angle image for each of the left-eye and right-eye pictures, and the depth meta information for each of the pictures. Here, the depth meta information includes position information and a representative depth value of the predetermined number of angle areas in the wide viewing angle image.

In this way, in the present technology, the video stream obtained by encoding image data of a wide viewing angle image for each of left-eye and right-eye pictures, and the depth meta information including position information and a representative depth value of the predetermined number of angle areas in the wide viewing angle image for each picture are transmitted. Therefore, depth information in the wide viewing angle image can be efficiently transmitted.

EFFECTS OF THE INVENTION

According to the present technology, depth control when superimposing and displaying the superimposition information by using depth information that is efficiently transmitted can be easily implemented. Note that advantageous effects described here are not necessarily restrictive, and any of the effects described in the present disclosure may be applied.

BRIEF DESCRIPTION OF DRAWINGS

Fig. 1 is a block diagram showing a configuration example of a transmission-reception system as an embodiment.
Fig. 2 is a block diagram showing a configuration example of a service transmission system.
Fig. 3 is a diagram for describing planar packing for obtaining a projection image from a spherical capture image.
Fig. 4 is a diagram showing a structure example of an SPS NAL unit in HEVC encoding.
Fig. 5 is a diagram for describing causing a center O(p,q) of a cutout position to agree with a reference point RP (x,y) of the projection image.
Fig. 6 is a diagram showing a structure example of rendering metadata.
Fig. 7 is a diagram for describing each piece of information in the structure example of Fig. 6.
Fig. 8 is a diagram for describing each piece of information in the structure example of Fig. 6.

Fig. 9 is a diagram showing a concept of depth control of graphics by a parallax value.

Fig. 10 is a diagram schematically showing an example of setting an angle area under an influence of one viewpoint.

Fig. 11 is a diagram for describing a representative depth value of the angle area.

Fig. 12 is diagrams each showing part of a spherical image corresponding to each of left-eye and right-eye projection images.

Fig. 13 is a diagram showing definition of the angle area.

Fig. 14 is a diagram showing a structure example of a component descriptor and details of main information in the structure example.

Fig. 15 is a diagram schematically showing an MP4 stream as a distribution stream.

Fig. 16 is a diagram showing a structure example of timed meta data for one picture including depth meta information.

Fig. 17 is a diagram showing details of main information in the configuration example of Fig. 16.

Fig. 18 is a diagram showing a description example of an MPD file.

Fig. 19 is a diagram showing a structure example of a PSVP/SEI message.

Fig. 20 is a diagram schematically showing the MP4 stream in a case where the depth meta information is inserted into a video stream and transmitted.

Fig. 21 is a block diagram showing a configuration example of a service receiver.

Fig. 22 is a block diagram showing a configuration example of a renderer.

Fig. 23 is a view showing one example of a display area for the projection image.

Fig. 24 is a diagram for describing that a depth value for giving parallax to subtitle display data differs depending on a size of the display area.

Fig. 25 is a diagram showing one example of a method of setting the depth value for giving parallax to the subtitle display data at each movement position in the display area.

Fig. 26 is a diagram showing one example of the method of setting the depth value for giving parallax to the subtitle display data at each movement position in a case where the display area transitions between a plurality of angle areas set in the projection image.

Fig. 27 is a diagram showing one example of setting the depth value in a case where an HMD is used as a display unit.

Fig. 28 is a flowchart showing one example of a procedure for obtaining a subtitle depth value in a depth processing unit.

Fig. 29 is a diagram showing an example of depth control in a case where superimposition positions of subtitles and graphics partially overlap each other.

MODE FOR CARRYING OUT THE INVENTION

A mode for carrying out the invention (hereinafter referred to as an embodiment) will be described below. Note that the description will be made in the following order.

1. Embodiment
2. Modification

<1. Embodiment>

[Configuration example of transmission-reception system]

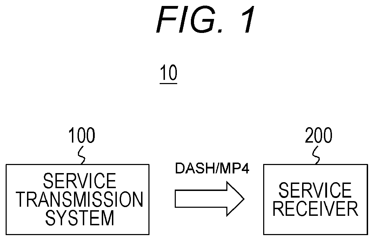

Fig. 1 shows a configuration example of a transmission-reception system 10 as the embodiment. The transmission-reception system 10 includes a service transmission system 100 and a service receiver 200.

The service transmission system 100 transmits DASH/MP4, that is, an MPD file as a metafile and MP4 (ISOBMFF) including media streams such as video and audio through a communication network transmission path or an RF transmission path. In this embodiment, a video stream obtained by encoding image data of a wide viewing angle image for each of left-eye and right-eye pictures is included as the media stream.

Furthermore, the service transmission system 100 transmits depth meta information for each picture together with the video stream. The depth meta information includes position information and a representative depth value of the predetermined number of angle areas in the wide viewing angle image. In this embodiment, the depth meta information further includes position information indicating which position in the areas the representative depth value relates to. For example, the depth meta information for each picture is transmitted by using a timed metadata stream associated with the video stream, or inserted into the video stream and transmitted.

The service receiver 200 receives the above-described MP4 (ISOBMFF) transmitted from the service transmission system 100 through the communication network transmission path or the RF transmission path. The service receiver 200 acquires, from the MPD file, meta information regarding the video stream, and furthermore, meta information regarding the timed metadata stream in a case where the timed metadata stream exists.

Furthermore, the service receiver 200 extracts left-eye and right-eye display area image data from the image data of the wide viewing angle image for each of the left-eye and right-eye pictures obtained by decoding the video stream. The service receiver 200 superimposes superimposition information data such as subtitles and graphics on the left-eye and right-eye display area image data for output. In this case, the display area changes interactively on the basis of a user's action or operation. When superimposing the superimposition information data on the left-eye and right-eye display area image data, on the basis of the depth meta information, parallax is given to the superimposition information data superimposed on each of the left-eye and right-eye display area image data.

For example, parallax is given on the basis of the minimum value of the representative depth value of the predetermined number of areas corresponding to a superimposition range included in the depth meta information. Furthermore, for example, in a case where the depth meta information further includes position information indicating which position in the areas the representative depth value relates to, parallax is added on the basis of the representative depth value of the predetermined number of areas corresponding to the superimposition range and the position information included in the depth meta information.

"Configuration example of service transmission system"

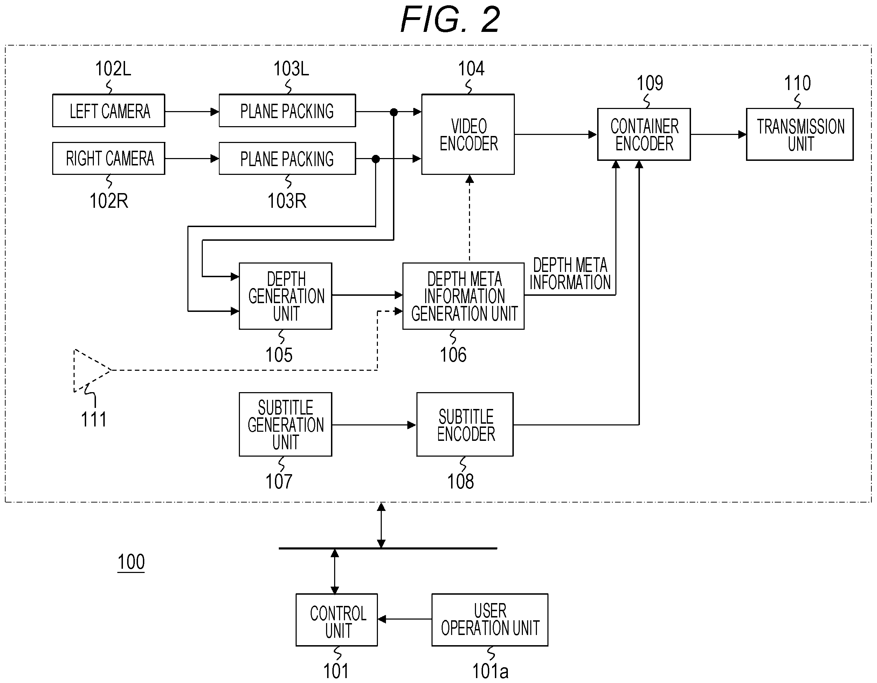

Fig. 2 shows a configuration example of the service transmission system 100. The service transmission system 100 includes a control unit 101, a user operation unit 101a, a left camera 102L, a right camera 102R, planar packing units 103L and 103R, a video encoder 104, a depth generation unit 105, a depth meta information generation unit 106, a subtitle generation unit 107, a subtitle encoder 108, a container encoder 109, and a transmission unit 110.

The control unit 101 includes a central processing unit (CPU), and controls an operation of each unit of the service transmission system 100 on the basis of a control program. The user operation unit 101a constitutes a user interface for the user to perform various operations, and includes, for example, a keyboard, a mouse, a touch panel, a remote controller, and the like.

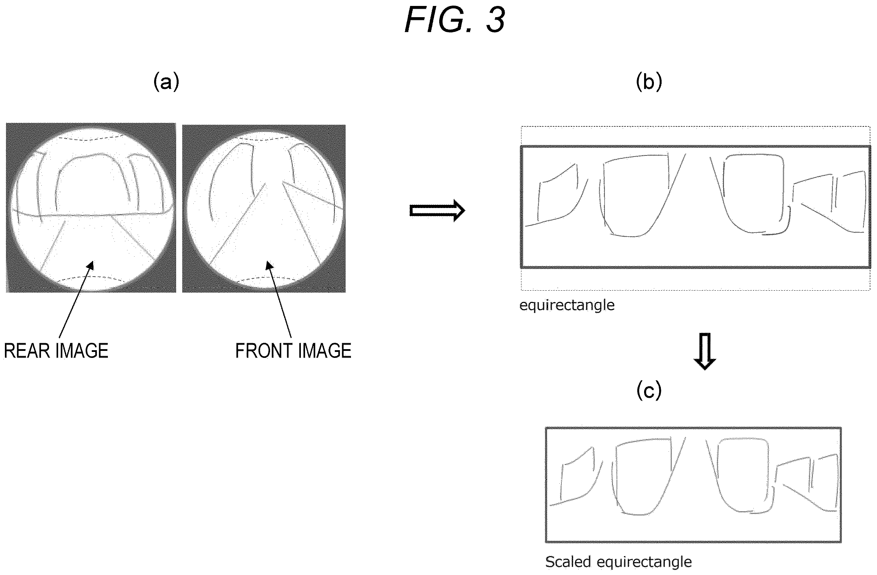

The left camera 102L and the right camera 102R constitute a stereo camera. The left camera 102L captures a subject to obtain a spherical capture image (360° VR image). Similarly, the right camera 102R captures the subject to obtain a spherical capture image (360° VR image). For example, the cameras 102L and 102R perform image capturing by a back-to-back method and obtains super wide viewing angle front and rear images each having a viewing angle of 180° or more and captured using a fisheye lens as spherical capture images (see Fig. 3(a)).

The planar packing units 103L and 103R cut out a part or all of the spherical capture images obtained with the cameras 102L and 102R respectively, and perform planar packing to obtain a rectangular projection image (projection picture) (see Fig. 3(b)). In this case, as a format type of the projection image, for example, equirectangular, cross-cubic, and the like is selected. Note that the planar packing units 103L and 103R cut out the projection image as necessary and perform scaling to obtain the projection image with a predetermined resolution (see Fig. 3(c)).

The video encoder 104 performs, for example, encoding such as HEVC on image data of the left-eye projection image from the planar packing unit 103L and image data of the right-eye projection image from the planar packing unit 103R to obtain encoded image data and generate a video stream including the encoded image data. For example, the image data of left-eye and right-eye projection images are combined by a side-by-side method or a top-and-bottom method, and the combined image data is encoded to generate one video stream. Furthermore, for example, the image data of each of the left-eye and right-eye projection images is encoded to generate two video streams.

Cutout position information is inserted into an SPS NAL unit of the video stream. For example, in encoding of HEVC, "default_display_window" corresponds thereto.

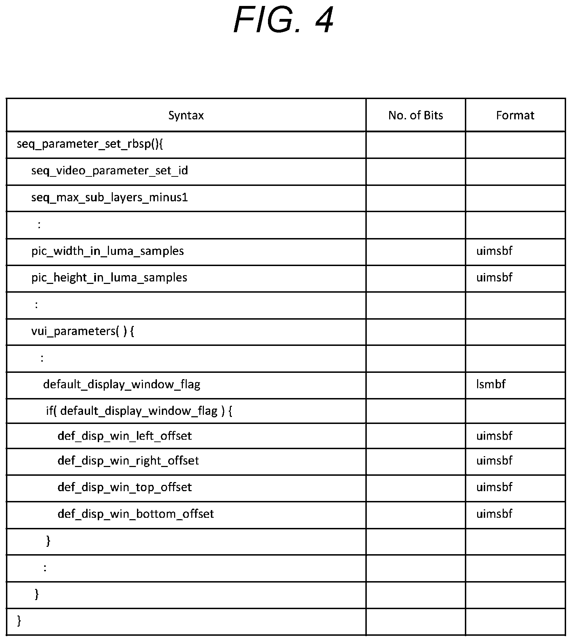

Fig. 4 shows a structure example (syntax) of the SPS NAL unit in HEVC encoding. The field of "pic_width_in_luma_samples" indicates the horizontal resolution (pixel size) of the projection image. The field of "pic_height_in_luma_samples" indicates the vertical resolution (pixel size) of the projection image. Then, when the "default_display_window_flag" is set, cutout position information "default_display_window" exists. The cutout position information is offset information with the upper left of the decoded image as a base point (0,0).

The field of "def_disp_win_left_offset" indicates the left end position of the cutout position. The field of "def_disp_win_right_offset" indicates the right end position of the cutout position. The field of "def_disp_win_top_offset" indicates the upper end position of the cutout position. The field of "def_disp_win_bottom_offset" indicates the lower end position of the cutout position.

In this embodiment, the center of the cutout position indicated by the cutout position information can be set to agree with the reference point of the projection image. Here, when the center of the cutout position is O(p,q), p and q are each represented by the following formula.

$$p = (\text{def\_disp\_win\_right\_offset} - \text{def\_disp\_win\_left\_offset}) * 1/2 + \text{def\_disp\_win\_left\_offset}$$

$$q = (\text{def\_disp\_win\_bottom\_offset} - \text{def\_disp\_win\_top\_offset}) * 1/2 + \text{def\_disp\_win\_top\_offset}$$

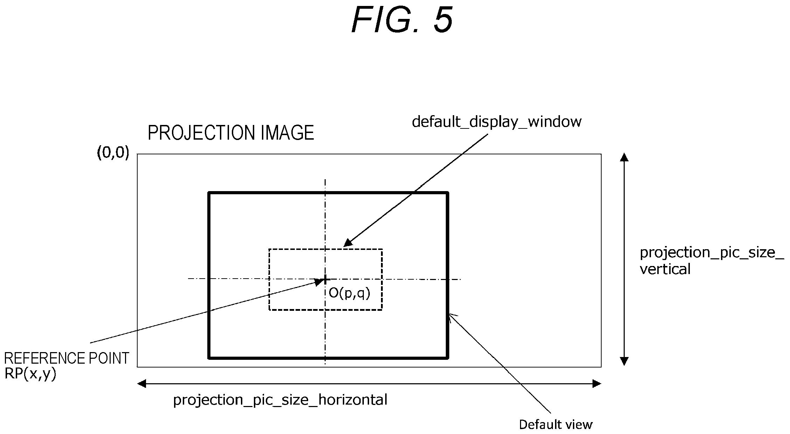

Fig. 5 shows that the center O(p,q) of the cutout position agrees with a reference point RP (x,y) of the projection image. In the illustrated example, "projection_pic_size_horizontal" indicates the horizontal pixel size of the projection image, and "projection_pic_size_vertical" indicates the vertical pixel size of the projection image. Note that a receiver that supports VR display can obtain a display view (display image) by rendering the projection image, but the default view is centered on the reference point RP (x, y). Note that the reference point can match the physical space by agreeing with a specified direction of actual north, south, east, and west.

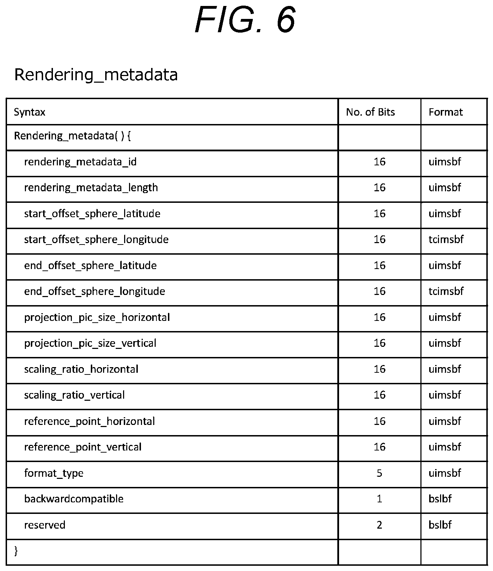

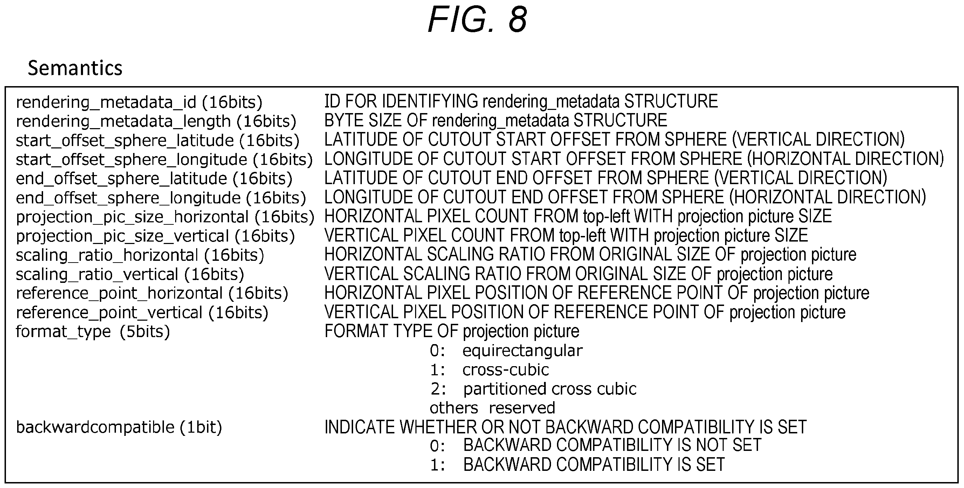

Furthermore, the video encoder 104 inserts an SEI message having rendering metadata (meta information for rendering) in the "SEIs" part of the access unit (AU). Fig. 6 shows a structure example (syntax) of the rendering metadata (Rendering_metadata). Furthermore, Fig. 8 shows details of main information (Semantics) in each structure example.

The 16-bit field of "rendering_metadata_id" is an ID that identifies the rendering metadata structure. The 16-bit field of "rendering_metadata_length" indicates the rendering metadata structure byte size.

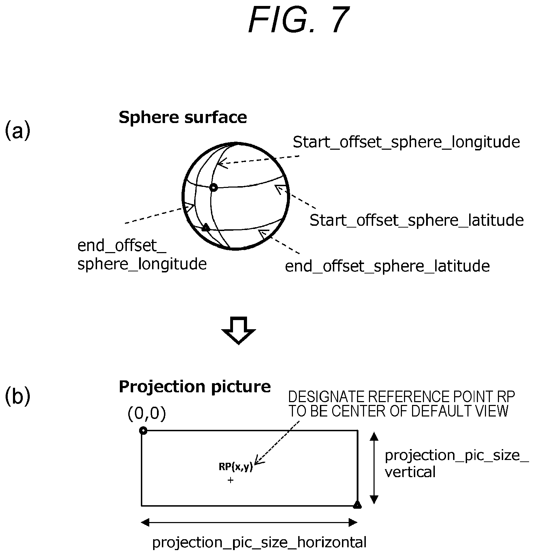

The 16-bit field of each of
"start_offset_sphere_latitude",
"start_offset_sphere_longitude",
"end_offset_sphere_latitude", and
"end_offset_sphere_longitude" indicates the cutout range information in a case where the spherical capture image undergoes planar packing (see Fig. 7(a)). The field of "start_offset_sphere_latitude" indicates the latitude (vertical direction) of the cutout start offset from the sphere. The field of "start_offset_sphere_longitude" indicates the longitude (horizontal direction) of the cutout start offset from the sphere. The field of "end_offset_sphere_latitude" indicates the latitude (vertical direction) of the cutout end offset from the sphere. The field of "end_offset_sphere_longitude" indicates the longitude (horizontal direction) of the cutout end offset from the sphere.

The 16-bit field of each of "projection_pic_size_horizontal" and "projection_pic_size_vertical" indicates size information on the projection image (projection picture) (see Fig. 7(b)). The field of "projection_pic_size_horizontal" indicates the horizontal pixel count from the top-left with the size of the projection image. The field of "projection_pic_size_vertical" indicates the vertical pixel count from the top-left with the size of the projection image.

The 16-bit field of each of "scaling_ratio_horizontal" and "scaling_ratio_vertical" indicates the scaling ratio from the original size of the projection image (see Figs. 3(b), (c)). The field of "scaling_ratio_horizontal" indicates the horizontal scaling ratio from the original size of the projection image. The field of "scaling_ratio_vertical" indicates the vertical scaling ratio from the original size of the projection image.

The 16-bit field of each of "reference_point_horizontal" and "reference_point_vertical" indicates position information of the reference point RP (x,y) of the projection image (see Fig. 7(b)). The field of "reference_point_horizontal" indicates the horizontal pixel position "x" of the reference point RP (x,y). The field of "reference_point_vertical" indicates the vertical pixel position "y" of the reference point RP (x,y).

The 5-bit field of "format_type" indicates the format type of the projection image. For example, "0" indicates equirectangular, "1" indicates cross-cubic, and "2" indicates partitioned cross cubic.

The 1-bit field of "backwardcompatible" indicates whether or not backward compatibility has been set, that is, whether or not the center O(p,q) of the cutout position indicated by the cutout position information inserted in the video stream layer has been set to match the reference point RP (x,y) of the projection image. For example, "0" indicates that backward compatibility has not been set, and "1" indicates that backward compatibility has been set.

The depth generation unit 105 determines a depth value that is depth information for each block by using the left-eye and right-eye projection images from the planar packing units 103L and 103R. In this case, the depth generation unit 105 obtains a parallax (disparity) value by determining sum of absolute difference (SAD) for each pixel block of 4×4, 8×8, and the like, and further converts the parallax (disparity) value into the depth value.

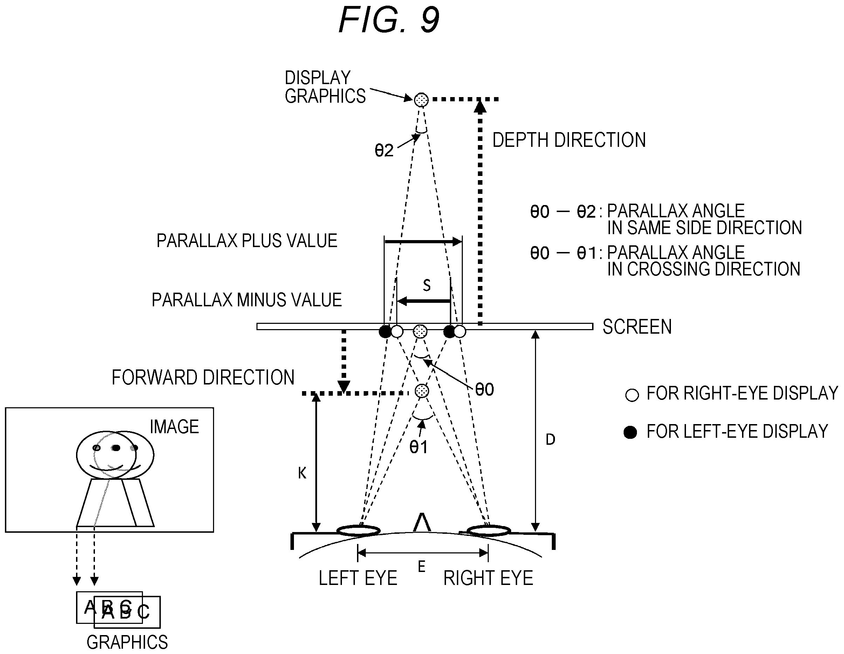

Here, the conversion from the parallax value to the depth value will be described. Fig. 9 shows, for example, a concept of depth control of graphics by using the parallax value. In a case where the parallax value is a negative value, the parallax is given such that the graphics for the left-eye display shifts to the right and the graphics for the right-eye display shifts to the left on the screen. In this case, the display position of graphics is forward of the screen. Furthermore, in a case where the parallax value is a positive value, the parallax is given such that the graphics for the left-eye display shifts to the left and the graphics for the right-eye display shifts to the right on the screen. In this case, the display position of graphics is behind the screen.

In Fig. 9, ($\theta$0 - $\theta$2) shows the parallax angle in the same side direction, and ($\theta$0 - $\theta$1) shows the parallax angle in the crossing direction. Furthermore, D indicates a distance between a screen and an installation surface of a camera (human eyes) (viewing distance), E indicates an installation interval (eye_baseline) of the camera (human eyes), K indicates the depth value, which is a distance to an object, and S indicates the parallax value.

At this time, K is calculated by the following formula (1) from a ratio of S and E and a ratio of D and K. By transforming this formula, formula (2) is obtained. Formula (1) constitutes a conversion formula for converting the parallax value S into the depth value K. Conversely, formula (2) constitutes a conversion formula for converting the depth value K into the parallax value S.

$$K = D/(1 + S/E) \quad (1)$$

$$S = (D - K)E/K \quad (2)$$

Returning to Fig. 2, the depth meta information generation unit 106 generates the depth meta information. The depth meta information includes the position information and the representative depth value of the predetermined number of angle areas set on the projection image. In this embodiment, the depth meta information further includes the position information indicating which position in the areas the representative depth value relates to.

Here, the predetermined number of angle areas is set by the user operating the user operation unit 101a. In this case, the predetermined number of viewpoints is set, and the predetermined number of angle areas under an influence of each viewpoint is further set. The position information of each angle area is given as offset information based on the position of the corresponding viewpoint.

Furthermore, the representative depth value of each angle area is the minimum value of the depth value of each block within the angle area among the depth value of each block generated by the depth generation unit 105.

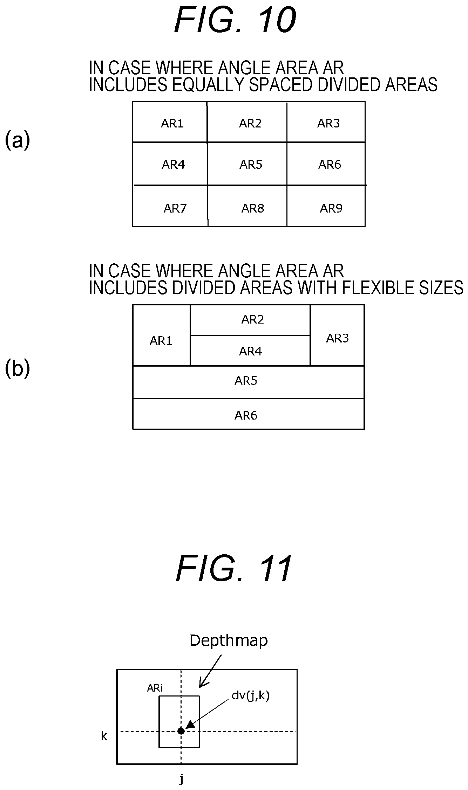

Fig. 10 schematically shows an example of setting the angle area under an influence of one viewpoint. Fig. 10(a) shows an example in a case where the angle area AR includes equally spaced divided areas, and nine angle areas AR1 to AR9 are set. Fig. 10(b) shows an example in a case where the angle area AR includes divided areas with flexible sizes, and six angle areas AR1 to AR6 are set. Note that the angle areas do not necessarily have to be arranged continuously in space.

Fig. 11 shows one angle area ARi set on the projection image. In the figure, an outer rectangular frame shows the entire projection image, and a depth value dv(j, k) in block units corresponding to this projection image exists, and these are combined to constitute a depth map (depthmap).

The representative depth value DPi in the angle area ARi is the minimum value among a plurality of depth values dv(j, k) included in the angle area ARi, and is represented by formula (3) below.

[Formula 1]

$$DPi = \min_{ARi}(dv(j,k)) \quad \cdots \quad (3)$$

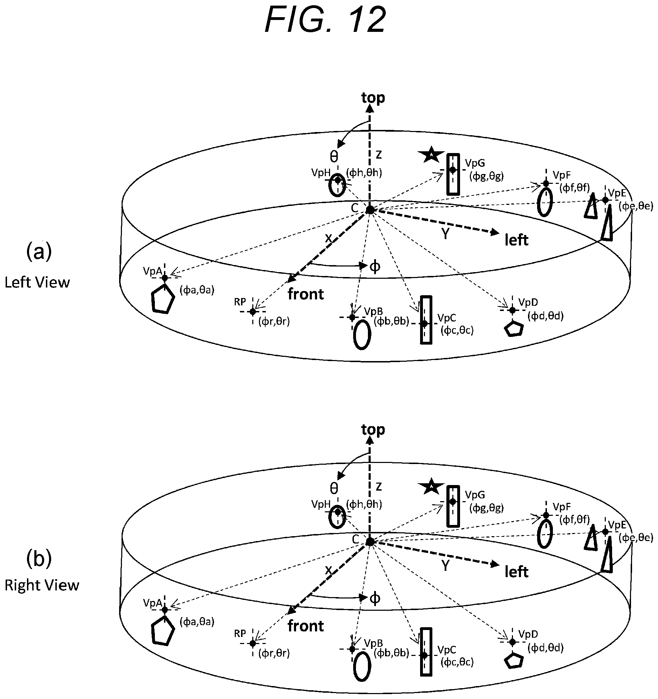

Figs. 12(a) and 12(b) show part of spherical images corresponding to the left-eye and right-eye projection images obtained by the planar packing units 103L and 103R, respectively. "C" indicates the center position corresponding to the viewing position. In the illustrated example, in addition to the reference point RP of the projection image, eight viewpoints from VpA to VpH that are the reference for the angle area are set.

The position of each point is indicated by an azimuth angle $\varphi$ and an elevation angle $\theta$. The position of each angle area (not shown in Fig. 12) is given by the offset angle from the corresponding viewpoint. Here, the azimuth angle $\varphi$ and the elevation angle $\theta$ each indicate an angle in the arrow direction, and the angle at the base point position of the arrow is 0 degrees. For example, as in the illustrated example, the azimuth angle $\varphi$ of the reference point (RP) is set at $\varphi r = 0°$, and the elevation angle $\theta$ of the reference point (RP) is set at $\theta r = 90°$ ($\pi/2$).

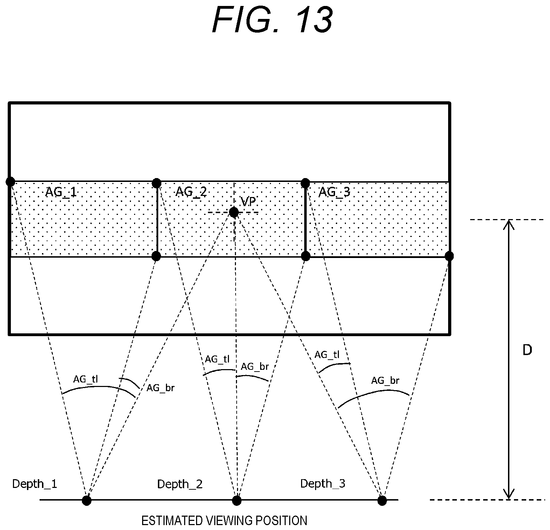

Fig. 13 shows definition of the angle area. In the illustrated example, an outer rectangular frame shows the entire projection image. Furthermore, in the illustrated example, three angle areas under the influence of the viewpoint VP, AG_1, AG_2, and AG_3, are shown. Each angle area is represented by angle angles AG_tl and AG_br that are position information on the upper left start point and the lower right end point of the rectangular angle area with respect to the viewpoint position. Here, AG_tl and AG_br are horizontal and vertical two-dimensional angle angles with respect to the viewpoint VP, where D is the estimated distance between the display position and the estimated viewing position.

Note that in the above description, the depth meta information generation unit 106 determines the representative depth value of each angle area by using the depth value of each block generated by the depth generation unit 105. However, as shown as a broken line in Fig. 2, it is also possible to determine the representative depth value of each angle area by using the depth value for each pixel or each block obtained by a depth sensor 111. In that case, the depth generation unit 105 is unnecessary.

The subtitle generation unit 107 generates subtitle data to be superimposed on the image. The subtitle encoder 108 encodes the subtitle data generated by the subtitle generation unit 107 to generate a subtitle stream. Note that the subtitle encoder 108 adds, to the subtitle data, the depth value that can be used for depth control of subtitles during default view display centered on the reference point RP (x,y) of the projection image or the parallax value obtained by converting the depth value by referring to the depth value for each block generated by the depth generation unit 105. Note that it is considered to further add to the subtitle data the depth value or parallax value that can be used during view display centered on each viewpoint set in the depth meta information described above.

Returning to Fig. 2, the container encoder 109 generates, as the distribution stream STM, a container, an MP4 stream here including the video stream generated by the video encoder 104, the subtitle stream generated by the subtitle encoder 108, and the timed metadata stream having depth meta information for each picture generated by the depth meta information generation unit 106. In this case, the container encoder 109 inserts the rendering metadata (see Fig. 6) into the MP4 stream including the video stream. Note that in this embodiment, the rendering metadata is inserted into both the video stream layer and the container layer, but may be inserted into only either one.

Furthermore, the container encoder 105 inserts a descriptor having various types of information into the MP4 stream including the video stream in association with the video stream. As this descriptor, a conventionally well-known component descriptor (component_descriptor) exists.

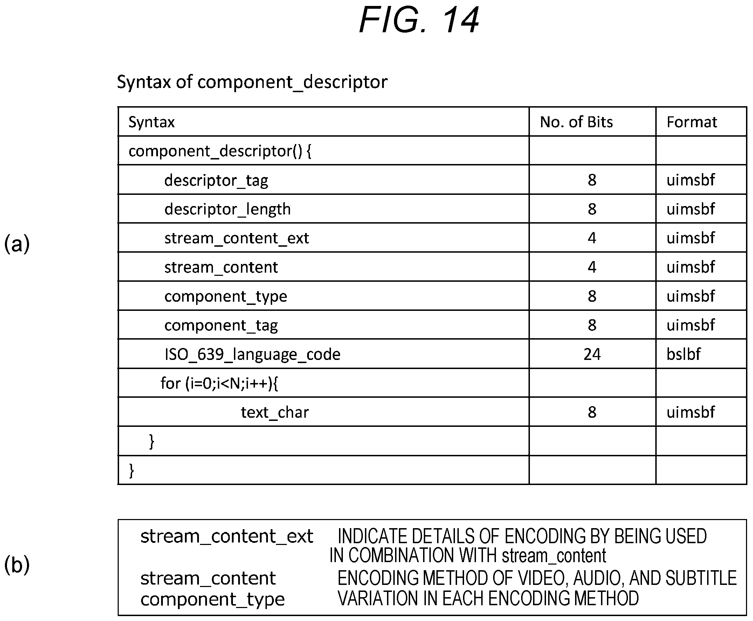

Fig. 14(a) shows a structure example (syntax) of the component descriptor, and Fig. 14(b) shows details of main information (semantics) in the structure example. The 4-bit field of "stream_content" indicates an encoding method of the video/audio subtitle. In this embodiment, this field is set at "0x9" and indicates HEVC encoding.

The 4-bit field of "stream_content_ext" indicates details of the encoding target by being used in combination with the above-described "stream_content."

The 8-bit field of "component_type" indicates variation in each encoding method. In this embodiment, "stream_content_ext" is set at "0x2" and "component_type" is set at "0x5" to indicate "distribution of stereoscopic VR by encoding HEVC Main10 Profile UHD".

The transmission unit 110 puts the MP4 distribution stream STM obtained by the container encoder 109 on a broadcast wave or a network packet and transmits the MP4 distribution stream STM to the service receiver 200.

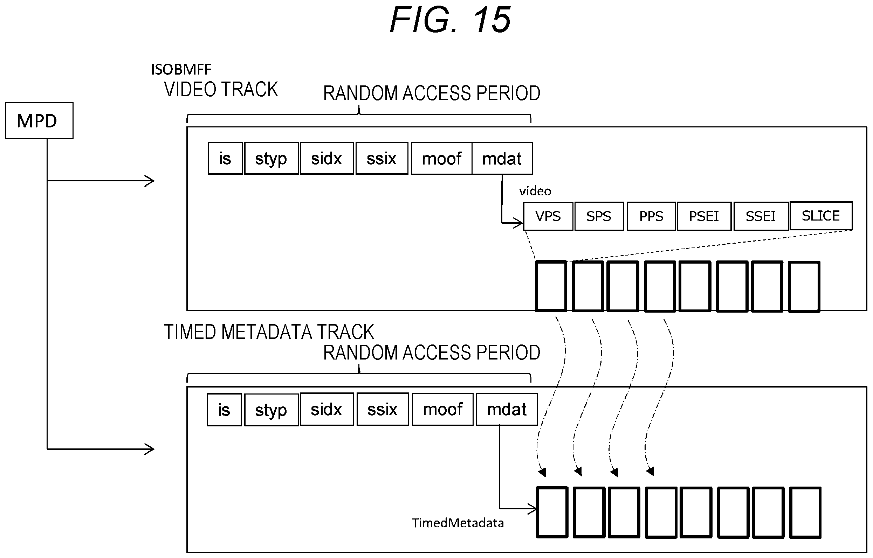

Fig. 15 schematically shows an MP4 stream. Fig. 15 shows an MP4 stream including a video stream (video track) and an MP4 stream including a timed metadata track stream (timed metadata track). Although omitted here, besides, an MP4 stream including the subtitle stream (subtitle track) and the like also exist.

The MP4 stream (video track) has a configuration in which each random access period starts with an initialization segment (IS), which is followed by boxes of "styp", "sidx (segment index box)", "ssix (sub-segment index box)", "moof (movie fragment box)" and "mdat (media data box)."

The initialization segment (IS) has a box structure based on an ISO base media file format (ISOBMFF). Rendering metadata and component descriptors are inserted in this initialization segment (IS).

The "styp" box contains segment type information. The "sidx" box contains range information on each track, indicates the position of "moof"/"mdat", and also indicates the position of each sample (picture) in "mdat". The "ssix" box contains track classification information, and is classified as I/P/B type.

The "moof" box contains control information. In the "mdat" box, NAL units of "VPS", "SPS", "PPS", "PSEI", "SSEI", and "SLICE" are placed. The NAL unit of "SLICE" includes the encoded image data of each picture in the random access period.

Meanwhile, the MP4 stream (timed metadata track) also has a configuration in which each random access period starts with an initialization segment (IS), followed by boxes of "styp", "sidx", "ssix", "moof", and "mdat." The "mdat" box contains depth meta information on each picture in the random access period.

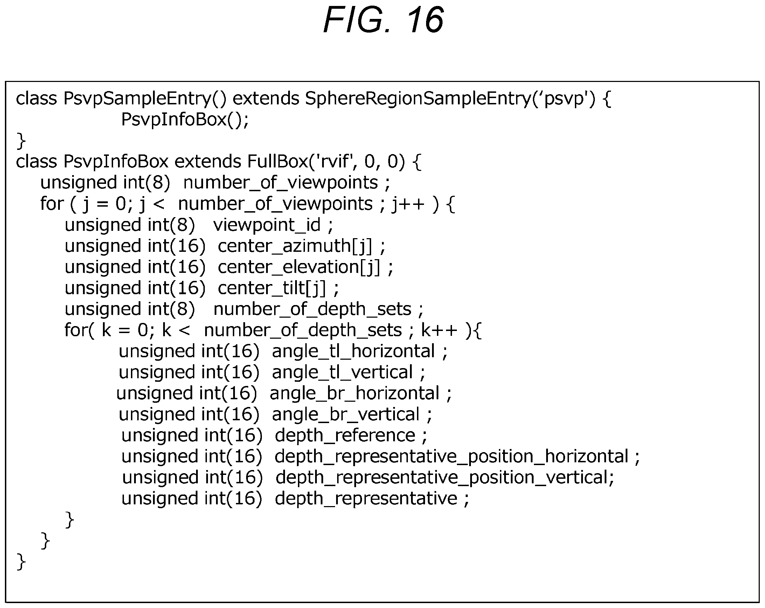

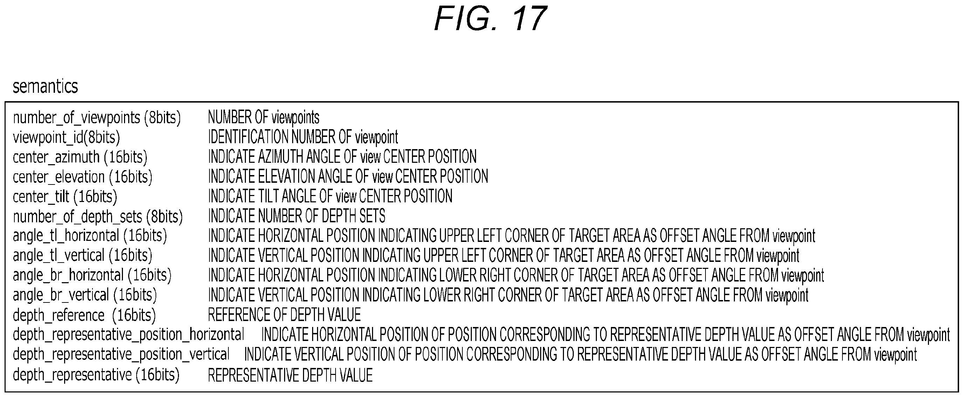

Fig. 16 shows a structure example of timed meta data for one picture including depth meta information (syntacs). Fig. 17 shows details of main information (semantics) in the configuration example. The 8-bit field of "number_of_viewpoints" indicates the number of viewpoints. The following information repeatedly exists for the number of viewpoints.

The 8-bit field of "viewpoint_id" indicates an identification number of the viewpoint. The 16-bit field of "center_azimuth" indicates the azimuth angle from the view center position, that is, the view point position of the viewpoint. The 16-bit field of "center_elevation" indicates the elevation angle from the view center position, that is, the view point position of the viewpoint. The 16-bit field of "center_tilt" indicates the tilt angle of the view center position, that is, the viewpoint. This tilt angle indicates inclination of the angle with respect to the view center. The 8-bit field of "number_of_depth_sets" indicates the number of depth sets, that is, the number of angle areas. The following information repeatedly exists for the number of depth sets.

The 16-bit field of "angle_tl_horizontal" indicates the horizontal position indicating the upper left corner of the target angle area as the offset angle from the viewpoint. The 16-bit field of "angle_tl_vertical" indicates the vertical position indicating the upper left corner of the target angle area as the offset angle from the viewpoint. The 16-bit field of "angle_br_horizontal" indicates the horizontal position indicating the lower right corner of the target angle area as the offset angle from the viewpoint. The 16-bit field of "angle_br_vertical" indicates the vertical position indicating the lower right corner of the target angle area as the offset angle from the viewpoint.

The 16-bit field of "depth_reference" indicates the reference of depth value, that is, the depth value corresponding to the depth of screen (see Fig. 9). The depth value allows adjustment of the depth parallax conversion formulas (1) and (2) such that the display offset of the left-eye image (left view) and the right-eye image (right view) becomes zero during parallax expansion. The 16-bit field of "depth_representative_position_horizontal" indicates the horizontal position of the position corresponding to the representative depth value, that is, the position indicating which position in the area the representative depth value relates to, as the offset angle from the viewpoint. The 16-bit field of "depth_representative_position_vertical" indicates the vertical position of the position corresponding to the representative depth value as the offset angle from the viewpoint. The 16-bit field of "depth_representative" indicates the representative depth value.

The MP4 stream including the video stream (video track) and the MP4 stream including the timed metadata track stream (timed metadata track) are associated with each other by the MPD file.

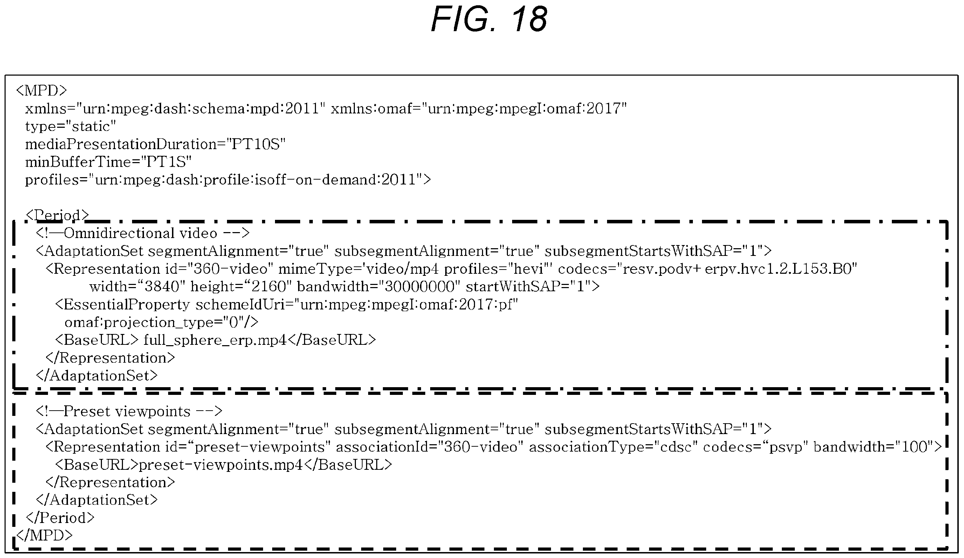

Fig. 18 shows a description example of the MPD file. Here, for simplicity of description, an example in which only information regarding the video track and timed metadata track is described is shown, but actually, information regarding other media streams including the subtitle stream and the like is also described.

Although detailed description is omitted, the part surrounded by a dashed-dotted rectangular frame indicates information related to the video track. Furthermore, the part surrounded by a broken rectangular frame indicates information regarding the timed metadata track. This indicates an adaptation set (AdaptationSet) including the stream "preset-viewpoints.mp4" including the meta information stream of the viewpoint. "Representation id" is "preset-viewpoints", "associationId" is "360-video", and "associationType" is "cdsc", which indicates linkage to the video track.

The operation of the service transmission system 100 shown in Fig. 2 will be briefly described. Each of the left camera 102L and the right camera 102R captures an image of a subject to obtain a spherical capture image (360° VR image). The spherical capture images obtained by the cameras 102L and 102R are supplied to the planar packing units 103L and 103R, respectively. The planar packing units 103L and 103R cut out a part or all of the spherical capture images obtained by the cameras 102L and 102R and perform planar packing to obtain a rectangular projection image.

The image data of the projection image obtained by the planar packing units 103L and 103R is supplied to the video encoder 104. The video encoder 104 encodes the image data of the projection image obtained by the planar packing units 103L and 103R, and generates a video stream including the encoded image data.

In this case, cutout position information is inserted into the SPS NAL unit of the video stream (see Fig. 4). Furthermore, the SEI message having rendering metadata (meta information for rendering) (see Fig. 6) is inserted into the "SEIs" part of the access unit (AU).

Furthermore, the image data of the projection image obtained by the planar packing units 103L and 103R is supplied to the video encoder 104. The depth generation unit 105 obtains the depth value that is depth information for each block by using the left-eye and right-eye projection image from the planar packing units 103L and 103R. That is, the depth generation unit 105 generates the depth map (dpepthmap) that is a collection of block-based depth value dv(j.k) for each picture.

The depth map for each picture generated by the depth generation unit 105 is supplied to the depth meta information generation unit 106. The depth meta information generation unit 106 generates depth meta information for each picture. The depth meta information includes position information and representative depth value of the predetermined number of angle areas set on the projection image. The depth meta information further includes position information indicating which position in the area the representative depth value relates to. Note that the depth meta information generation unit 106 may use the depth map generated by the information obtained by using the depth sensor 111, instead of the depth map for each picture generated by the depth generation unit 105.

Furthermore, the subtitle generation unit 107 generates the subtitle data to be superimposed on the image. The subtitle data is supplied to the subtitle encoder 108. The subtitle encoder 108 encodes the subtitle data to generate the subtitle stream. In this case, the depth value that can be used for depth control of subtitles during default view display centered on the reference point RP (x,y) of the projection image is added to the subtitle data.

The video stream generated by the video encoder 104, the subtitle stream generated by the subtitle encoder 108, and the depth meta information for each picture generated by the depth meta information generation unit 106 are supplied to a container decoder 109. The container decoder 109 generates, as the distribution stream STM, a container containing the video stream, the subtitle stream, and the timed metadata stream having depth meta information for each picture, here, the MP4 stream.

In this case, the container encoder 109 inserts the rendering metadata (see Fig. 6) into the MP4 stream including the video stream. Furthermore, the container encoder 109 inserts the descriptor having various pieces of information, for example, the component descriptor (see Fig. 14) and the like into the MP4 stream including the video stream, in association with the video stream.

The MP4 stream obtained by the container encoder 109 is supplied to the transmission unit 110. The transmission unit 110 puts the MP4 distribution stream STM obtained by the container encoder 109 on a broadcast wave or a network packet for transmission to the service receiver 200.

Note that in the above description, the depth meta information for each picture is transmitted by using the timed metadata stream. However, it is considered to insert the depth meta information for each picture into the video stream for transmission. In this case, a PSVP/SEI message (SEI message) including the depth meta information is inserted into the "SEIs" part of the access unit (AU) of each picture.

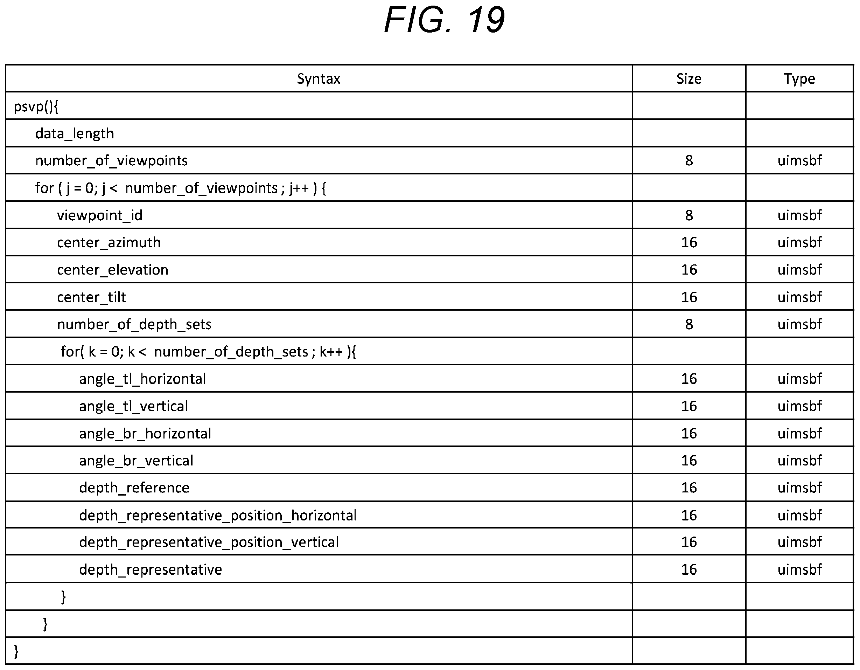

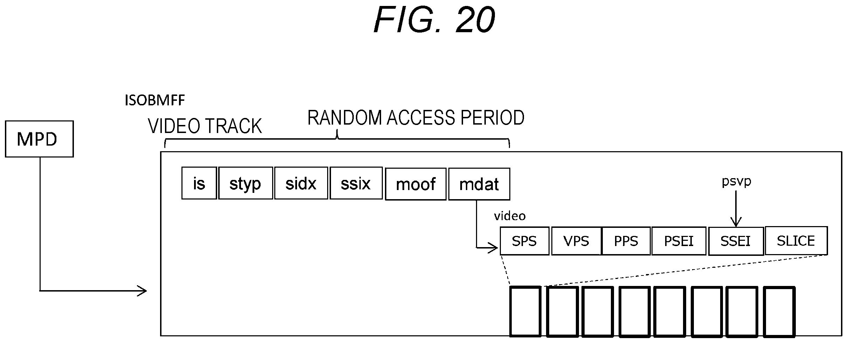

Fig. 19 shows a structure example (syntax) of the PSVP/SEI message. Since the main information in the PSVP/SEI message is similar to the main information in the timed meta data shown in Fig. 16, detailed description thereof will be omitted. Fig. 20 schematically shows the MP4 stream in a case where the depth meta information for each picture is inserted into the video stream and transmitted. As shown in the figure, in this case, the MP4 stream including the timed metadata track stream (timed metadata track) does not exist (see Fig. 15) .

"Service receiver"

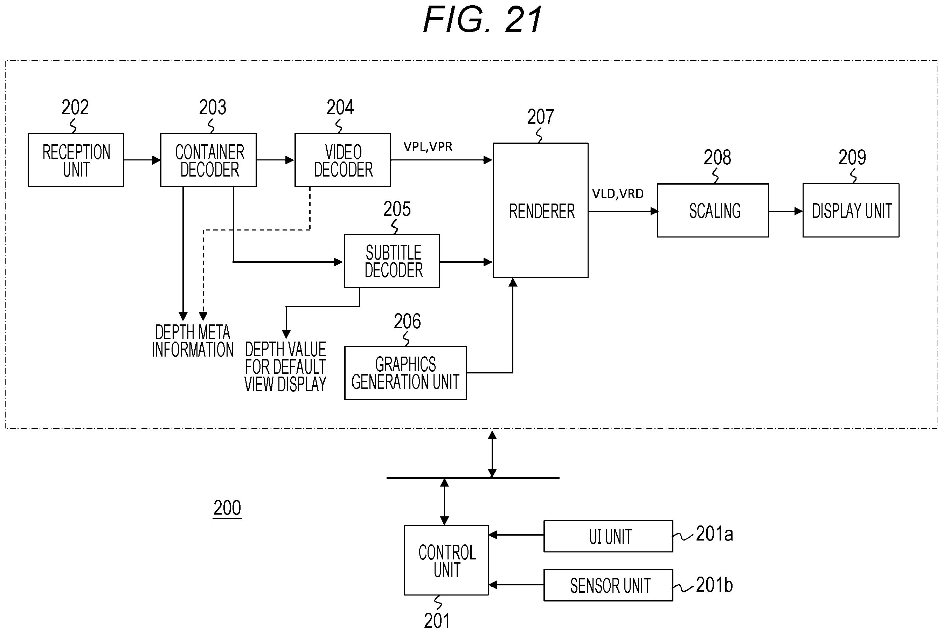

Fig. 21 shows a configuration example of the service receiver 200. The service receiver 200 includes a control unit 201, a UI unit 201a, a sensor unit 201b, a reception unit 202, a container decoder 203, a video decoder 204, a subtitle decoder 205, a graphics generation unit 206, a renderer 207, a scaling unit 208, and a display unit 209.

The control unit 201 includes a central processing unit (CPU), and controls an operation of each unit of the service receiver 200 on the basis of a control program. The UI unit 201a performs user interface, and includes, for example, a pointing device for the user to operate movement of the display area, and a microphone and the like for the user to input voice to instruct movement of the display area by voice. The sensor unit 201b includes various sensors for acquiring information on a user state and environment, and includes, for example, a posture detection sensor mounted on a head mounted display (HMD) and the like.

The reception unit 202 receives the MP4 distribution stream STM transmitted from the service transmission system 100 on a broadcast wave or a network packet. In this case, the MP4 stream including the video stream, the subtitle stream, and the timed metadata stream is obtained as the distribution stream STM. Note that in a case where the depth meta information on each picture is inserted in the video stream and sent, no MP4 stream including the timed metadata stream exists.

The container decoder 203 extracts the video stream from the MP4 stream including the video stream received by the reception unit 202, and sends the extracted video stream to the video decoder 204. Furthermore, the container decoder 203 extracts information and the like on a "moov" block from the MP4 stream including the video stream, and sends the information and the like to the control unit 201. As one piece of the information on the "moov" block, the rendering metadata (see Fig. 6) exists. Furthermore, as one piece of the information on the "moov" block, the component descriptor (see Fig. 14) also exists.

Furthermore, the container decoder 203 extracts the subtitle stream from the MP4 stream including the subtitle stream received by the reception unit 202, and sends the subtitle stream to the subtitle decoder 205. Furthermore, when the reception unit 202 receives the MP4 stream including the timed metadata stream, the container decoder 203 extracts the timed metadata stream from the MP4 stream, extracts the depth meta information included in the timed metadata stream, and sends the depth meta information to the control unit 201.

The video decoder 204 performs decoding processing on the video stream extracted by the container decoder 203 to obtain image data of the left-eye and right-eye projection image. Furthermore, the video decoder 204 extracts a parameter set or SEI message inserted in the video stream for transmission to the control unit 201. The extracted information includes information on the cutout position "default_display_window" inserted in the SPS NAL packet and furthermore the SEI message having the rendering metadata (see Fig. 6). Furthermore, in a case where the depth meta information is inserted in the video stream and sent, the SEI message including the depth meta information (see Fig. 19) is also included.

The subtitle decoder 205 performs decoding processing on the subtitle stream extracted by the container decoder 203 to obtain the subtitle data, obtains subtitle display data and subtitle superimposition position data from the subtitle data, and sends the subtitle display data and subtitle superimposition position data to the renderer 207. Furthermore, furthermore, the subtitle decoder 205 acquires the depth value that can be used for depth control of the subtitles added to the subtitle data during default view display, and sends the depth value to the control unit 201.

The graphics generation unit 206 generates graphics display data and graphics superimposition position data related to graphics such as on screen display (OSD) or application, or electronic program guide (EPG), and sends the data to the renderer 207.

The renderer 207 generates left-eye and right-eye image data for displaying a three-dimensional image (stereoscopic image) on which subtitles and graphics are superimposed on the basis of image data of the left-eye and right-eye projection images obtained by the video decoder 204, subtitle display data and subtitle superimposition position data from the subtitle decoder 205, and graphics display data and graphics superimposition position data from the graphics generation unit 206. In this case, under the control of the control unit 201, the display area is changed interactively in response to the posture and operation of the user.

The scaling unit 208 performs scaling on the left-eye and right-eye image data so as to match the display size of the display unit 209. The display unit 209 displays the three-dimensional image (stereoscopic image) on the basis of the left-eye and right-eye image data that has undergone the scaling processing. The display unit 209 includes, for example, a display panel, a head mounted display (HMD), and the like.

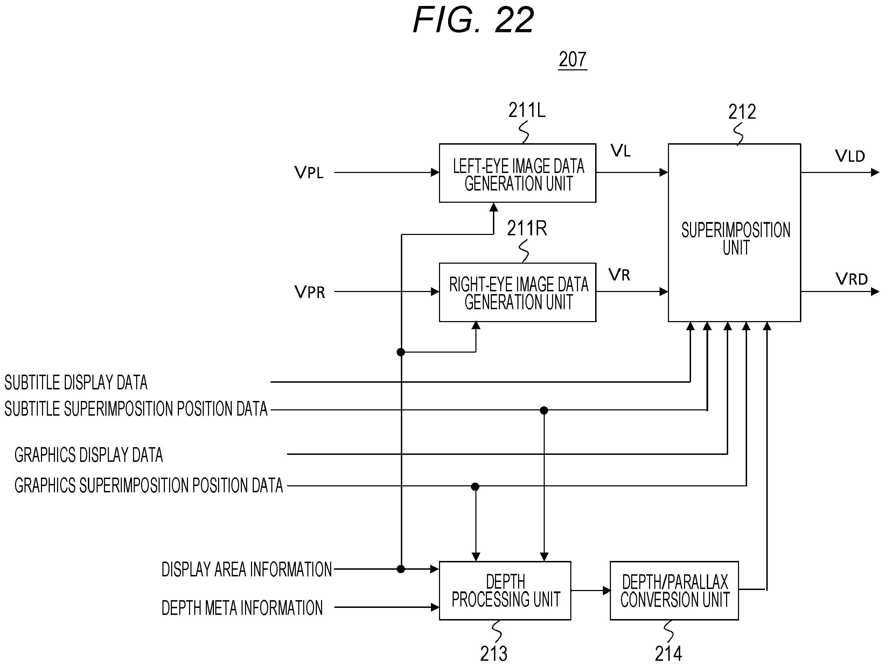

Fig. 22 shows a configuration example of the renderer 207. The renderer 207 includes a left-eye image data generation unit 211L, a right-eye image data generation unit 211R, a superimposition unit 212, a depth processing unit 213, and a depth/parallax conversion unit 214.

Image data VPL of the left-eye projection image is supplied from the video decoder 204 to the left-eye image data generation unit 211L. Furthermore, display area information is supplied from the control unit 201 to the left-eye image data generation unit 211L. The left-eye image data generation unit 211L performs rendering processing on the left-eye projection image to obtain left-eye image data VL corresponding to the display area.

Image data VPR of the right-eye projection image is supplied from the video decoder 204 to the image data generation unit 211R. Furthermore, the display area information is supplied from the control unit 201 to the right-eye image data generation unit 211R. The right-eye image data generation unit 211R performs rendering processing on the right-eye projection image to obtain right-eye image data VR corresponding to the display area.

Here, on the basis of information on the direction and amount of movement obtained by the gyro sensor equipped with HMD and the like, or on the basis of pointing information by the user operation or voice UI information of the user, the control unit 201 obtains information on the moving direction and speed of the display area and generates display area information for interactively changing the display area. Note that, for example, when starting display such as when the power is turned on, the control unit 201 generates the display area information corresponding to the default view centered on the reference point RP (x,y) of the projection image (see Fig. 5) .

The display area information and the depth meta information are supplied from the control unit 201 to the depth processing unit 213. Furthermore, the subtitle superimposition position data and the graphics superimposition position data are supplied to the depth processing unit 213. The depth processing unit 213 obtains a subtitle depth value, that is, a depth value for giving parallax to the subtitle display data on the basis of the subtitle superimposition position data, the display area information, and the depth meta information.

For example, the depth processing unit 213 sets the depth value for giving parallax to the subtitle display data as the depth value with the minimum value of the representative depth value of the predetermined number of angle areas corresponding to the subtitle superimposition range indicated by the subtitle superimposition position data. Since the depth value for giving parallax to the subtitle display data is determined in this way, the subtitles can be displayed forward of the image object existing in the subtitle superimposition range, and the consistency of perspective for each object in the image can be maintained.

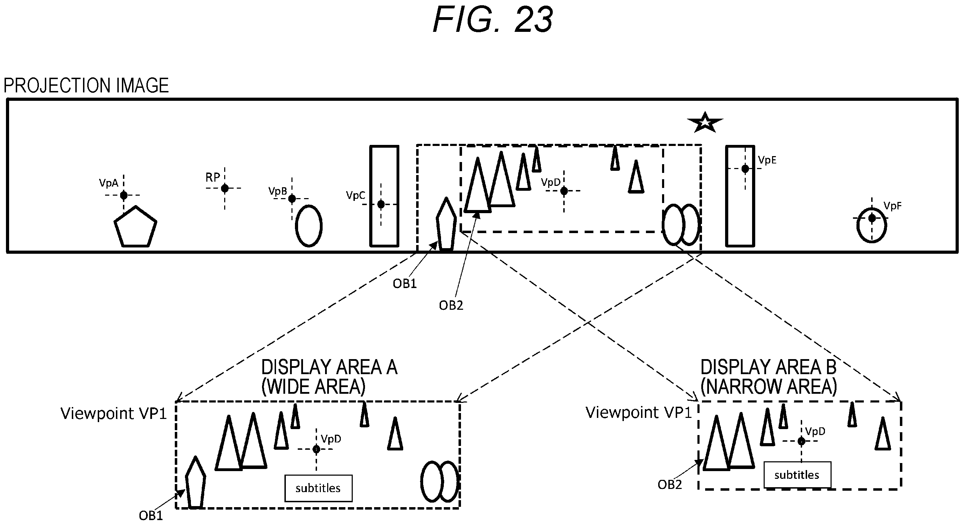

Fig. 23 shows one example of the display area for the projection image. Note that left-eye and right-eye two projection images exist, but only one projection image is shown here for simplification of the drawing. In this projection image, in addition to the reference point RP, six viewpoints of VpA to VpF that are the reference of the angle area are set. The position of each viewpoint is set by an offset from the origin at the upper left of the projection image. Alternatively, the position of each viewpoint is set by an offset from the reference point RP, which is set by the offset from the origin at the upper left of the projection image.

In the illustrated example, a display area A and a display area B are at positions including the viewpoint VpD. In this case, the display area A and the display area B have different area sizes, the display area A is wide and the display area B is narrow. There are variations in the size of the display area depending on how much display capacity the receiver has.

Since the display area A includes an object OB1 in the close-distant view, the subtitle is superimposed so as to be displayed forward of the object OB1. Meanwhile, the display area B does not include the object OB1 in the close-distant view, and therefore the subtitle is superimposed so as to be displayed behind the object OB1 in the close-distant view, that is, forward of an object OB2 located far away.

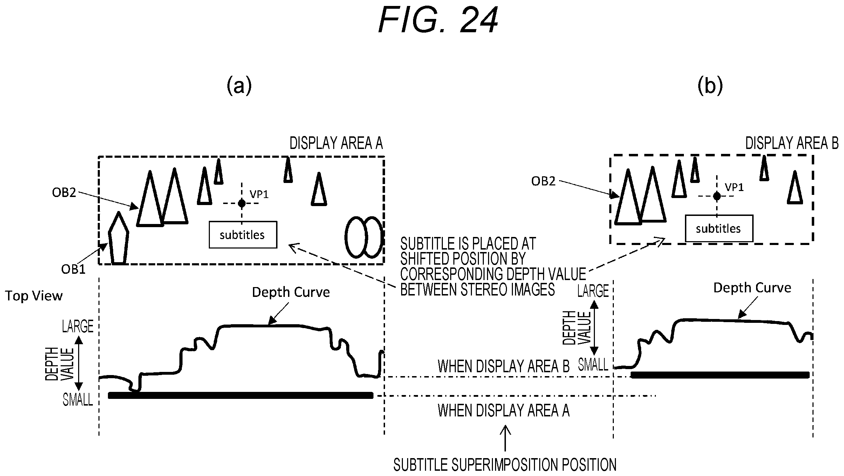

Fig. 24(a) shows a depth curve indicating distribution of the depth value in the display area A. In this case, the depth value for giving parallax to the subtitle display data is set at a value smaller than the depth value corresponding to the object OB1 such that the subtitle superimposition position is forward of object OB1 in the close-distant view. Fig. 24(b) shows a depth curve indicating distribution of the depth value in the display area B. In this case, the depth value for giving parallax to the subtitle display data is set at a value smaller than the depth value corresponding to the object OB2 such that the subtitle superimposition position is forward of object OB2 positioned behind the object OB1 in the close-distant view.

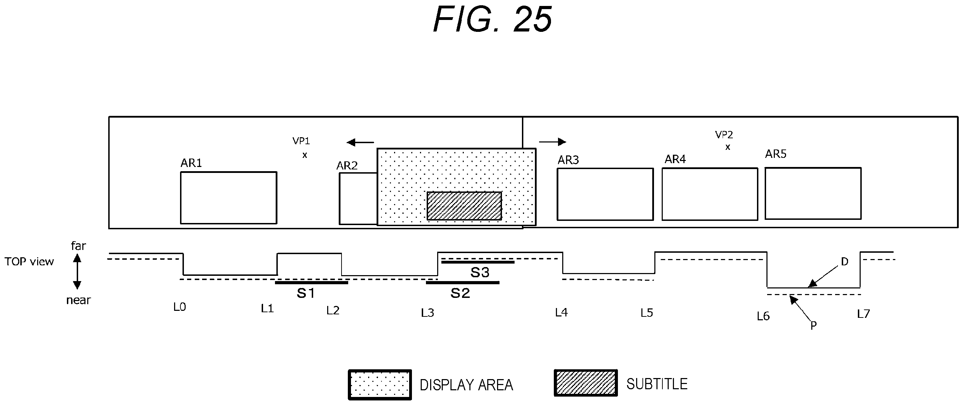

Fig. 25 shows one example of a method of setting the depth value for giving parallax to the subtitle display data at each movement position in a case where the display area moves between a first area under the influence of a viewpoint VP1 and a second area under the influence of a viewpoint VP2. In the illustrated example, angle areas AR1 and AR2 exist in the first area under the influence of the viewpoint VP1. Furthermore, angle areas AR3, AR4, and AR5 exist in the second area under the influence of the viewpoint VP2.

Each angle area has a depth representative value, and the solid polygonal line D indicates the degree of depth according to the representative depth value. The value the solid polygonal line D takes is as follows. That is, L0 to L1 is a depth representative value of the angle area AR1. L1 to L2, which is a part where the angle area is not defined, is a depth value indicating "far". L2 to L3 is a depth representative value of the angle area AR2. L3 to L4, which is a part where the angle area is not defined, is a depth value indicating "far". L4 to L5 is a depth representative value of the angle area AR3. L5 to L6 is a depth representative value of the angle area AR4. Then, L6 to L7 is a depth representative value of the angle area AR5.

The broken line P indicates a depth value for giving parallax to the subtitle display data (subtitle depth value). When the display area moves, the subtitle depth value transitions so as to trace the solid polygonal line D. However, since the part L1 to L2 is narrower than the horizontal width of the subtitle, the subtitle depth value does not trace the solid polygonal line D and becomes the depth value L0 to L1 or the depth value L2 to L3. Furthermore, when the subtitle overlaps a plurality of depth value sections of the solid polygonal line D, the subtitle depth value follows the smaller depth value. Note that S1 to S3 schematically show one example of the subtitle position and the subtitle depth value at that time.

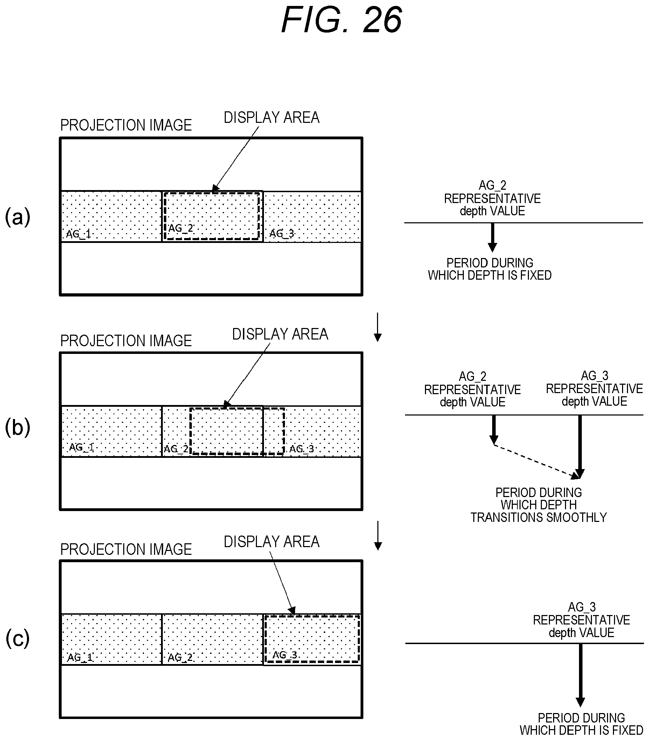

Fig. 26 shows one example of the method of setting the depth value for giving parallax to the subtitle display data at each movement position in a case where the display area transitions between a plurality of angle areas set in the projection image. In the illustrated example, angle areas AG_1, AG_2, and AG_3 that are adjacent to each other in the horizontal direction exist in the projection image.

As shown in Fig. 26(a), in a case where the display area is included in the angle area AG_2, the depth value for giving parallax to the subtitle display data (subtitle depth value) is the representative depth value of this angle area AG_2. Furthermore, as shown in Fig. 26(b), in a case where the display area overlaps both the angle areas AG_2 and AG_3, the subtitle depth value may be the minimum value of the representative depth values of the angle areas AG_2 and AG_3. However, it may be considered that the representative depth values of the angle areas AG_2 and AG_3 undergo weighted addition according to a ratio of the display areas overlapping each angle area and the like. In that case, the subtitle depth value can be smoothly transitioned from a state where the display area is included in the angle area AG_2 to a state where the display area is included in the angle area AG_3.

Note that in a case where the display area overlaps both the angle areas AG_2 and AG_3 in this way, as described above, besides performing weighted addition on the representative depth values of the angle areas AG_2 and AG_3 to obtain the subtitle depth value according to the ratio of the display area overlapping each angle area and the like, it is possible to change the depth value stepwise in the target area, for example, on the basis of position information indicating which position in the area each representative depth value relates to.

For example, in Fig. 26(b), when a right end of the display area moves from AG_2 to AG_3, it is possible to perform display control to not instantly change the depth representative value from the value of AG_2 to the value of AG_3, but gradually change from the depth representative value of AG_2 to the depth representative value of AG_3 until the right end of the display area reaches the position of the depth representative value of AG_3, and the like.

Furthermore, as shown in Fig. 26(c), in a case where the display area is included in the angle area AG_3, the depth value for giving parallax to the subtitle display data (subtitle depth value) is the representative depth value of the angle area AG_3.

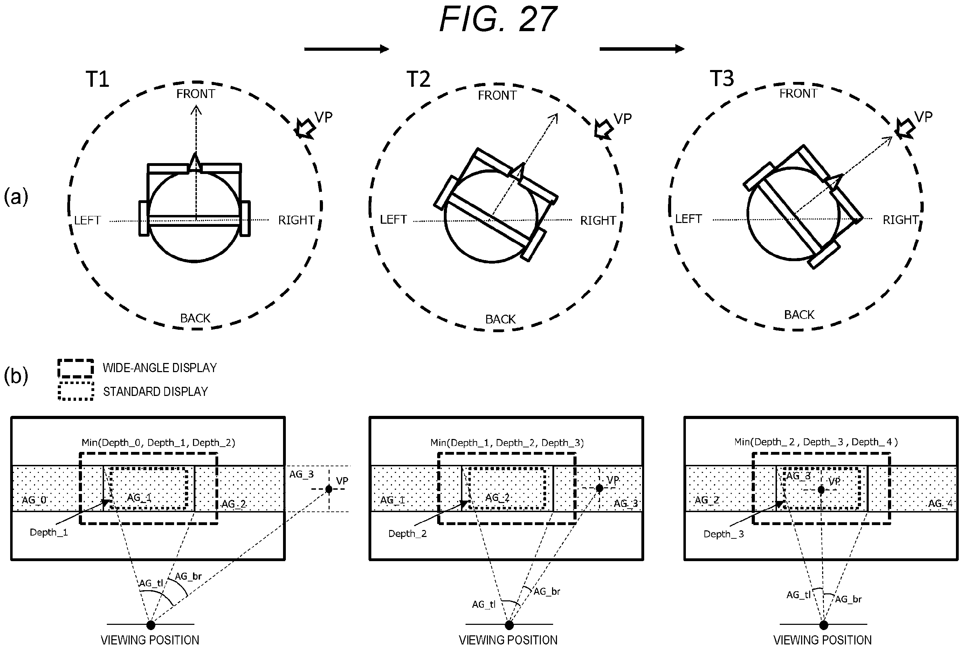

Fig. 27 shows an example in a case where a head mounted display (HMD) is used as the display unit 209. In this case, as shown in Fig. 27(a), as the user wearing the HMD turns the neck from left to right like T1 → T2 → T3, the view point approaches the viewpoint VP, and in a state of T3, the view point matches the viewpoint VP.

Fig. 27(b) shows one example when the display area moves while the user wearing the HMD turns the head from left to right like T1→T2→T3. Here, consider standard display in which the display area is equal to or less than the angle area and wide-angle display in which the display area is larger than the angle area.

In a T1 state, the display area corresponds to the angle area AG_1. Since the display area is included in the angle area AG_1 for standard display, the subtitle depth value (depth value for giving parallax to subtitle display data) is the representative depth value of the angle area AG_1. Meanwhile, since the display area extends over the angle areas AG_0 to AG_2 for wide-angle display, the subtitle depth value is the minimum value of the representative depth values of the angle areas AG_0 to AG_2.

Furthermore, in a T2 state, the display area corresponds to the angle area AG_2. Since the display area is included in the angle area AG_2 for standard display, the subtitle depth value (depth value for giving parallax to subtitle display data) is the representative depth value of the angle area AG_2. Meanwhile, since the display area extends over the angle areas AG_1 to AG_3 for wide-angle display, the subtitle depth value is the minimum value of the representative depth values of the angle areas AG_1 to AG_3.

Furthermore, in a T3 state, the display area corresponds to the angle area AG_3. Since the display area is included in the angle area AG_3 for standard display, the subtitle depth value (depth value for giving parallax to subtitle display data) is the representative depth value of the angle area AG_3. Meanwhile, since the display area extends over the angle areas AG_2 to AG_4 for wide-angle display, the subtitle depth value is the minimum value of the representative depth values of the angle areas AG_2 to AG_4.

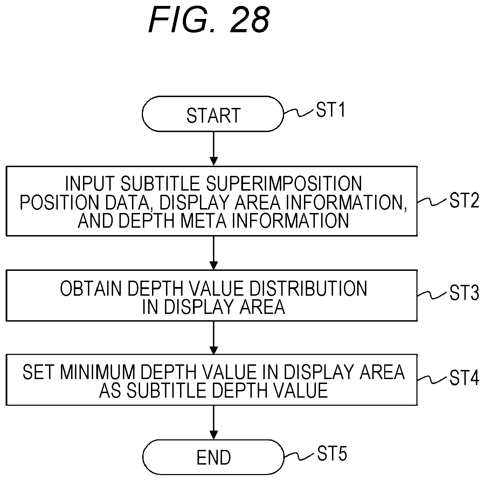

The flowchart of Fig. 28 shows one example of a procedure for obtaining the subtitle depth value in the depth processing unit 213. This flowchart is executed for each picture. The depth processing unit 213 starts processing in step ST1. Next, in step ST2, the depth processing unit 213 inputs the subtitle superimposition position data, the display area information, and the depth meta information.

Next, in step ST3, the depth processing unit 213 obtains a depth value distribution in the display area (see solid polygonal line D of Fig. 25). In this case, in a portion where the angle area exists, the representative depth value thereof is used, and in a portion where the angle area does not exist, the depth value indicating "far" is used. Next, in step ST4, the minimum depth value within the subtitle superimposition range is set as the subtitle depth value. Then, the depth processing unit 213 ends the processing in step ST5.

Note that the depth processing unit 213 does not set the minimum depth value in the subtitle superimposition range as the subtitle depth value in step ST4. In a case where the display area overlaps a plurality of depth value areas, it is possible to avoid a sudden digital change in the subtitle depth value and cause a smooth transition in the subtitle depth value by performing weighted addition on each depth value according to the overlapping ratio to obtain the subtitle depth value.

Returning to Fig. 22, furthermore, the depth processing unit 213 obtains a graphics depth value (depth value for giving parallax to the graphics display data) on the basis of the graphics superimposition position data, the display area information, and the depth meta information. Although detailed description is omitted, the processing for determining the graphics depth value in the depth processing unit 213 is similar to the above-described processing for determining the subtitle depth value. Note that in a case where the superimposition positions of subtitles and graphics partially overlap each other, the graphics depth value is adjusted such that the graphics is positioned forward of the subtitles.

The depth/parallax conversion unit 214 converts the subtitle depth value and graphics depth value obtained by the depth processing unit 213 into parallax values to obtain a subtitle parallax value and a graphics parallax value, respectively. In this case, the conversion is performed by formula (2) described above.

The superimposition unit 212 is supplied with the left-eye image data VL obtained by the left-eye image data generation unit 211L and the right-eye image data VR obtained by the right-eye image data generation unit 211R. Furthermore, the superimposition unit 212 is supplied with the subtitle display data and the subtitle superimposition position data, and the graphics display data and the graphics superimposition position data. Moreover, the superimposition unit 212 is supplied with the subtitle parallax value and the graphics parallax value obtained by the depth/parallax conversion unit 214.

The superimposition unit 212 superimposes the subtitle display data at the superimposition position indicated by the subtitle superimposition position data of the left-eye image data and right-eye image data. At that time, the superimposition unit 212 gives parallax on the basis of the subtitle parallax value. Furthermore, the superimposition unit 212 superimposes the graphics display data at the superimposition position indicated by the graphics superimposition position data of the left-eye image data and right-eye image data. At that time, the superimposition unit 212 gives parallax on the basis of the graphics parallax value. Note that in a case where superimposition positions of subtitles and graphics partially overlap each other, for that part, the superimposition unit 212 overwrites the graphics display data on the subtitle display data.

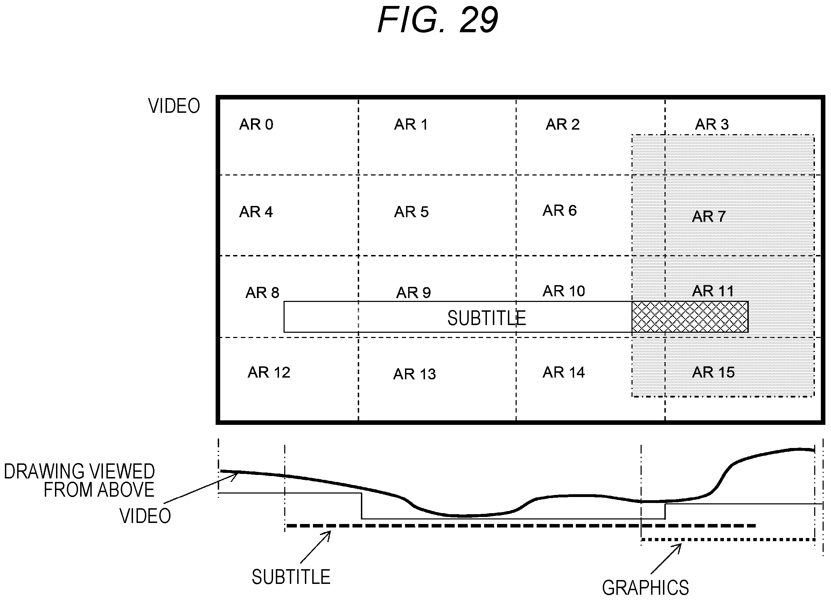

Fig. 29 is a diagram showing an example of depth control in a case where superimposition positions of subtitles and graphics partially overlap each other. In the figure, the subtitle is displayed forward of image objects of four angle areas AR8, AR9, AR10, and AR11 corresponding to the subtitle display position. Furthermore, the graphic is displayed forward of eight angle areas AR2, AR3, AR6, AR7, AR10, AR11, AR14, and AR15 on the right side, and forward of the subtitle.

The superimposition unit 212 outputs left-eye image data VLD in which the left-eye subtitle display data and the left-eye graphics display data are superimposed on the left-eye image data. Furthermore, the superimposition unit 212 outputs right-eye image data VRD in which the right-eye subtitle display data and the right-eye graphics display data are superimposed on the right-eye image data.

Note that as described above, the subtitle parallax value to give parallax to the subtitle display data can be obtained by the depth processing unit 213 obtaining the subtitle depth value on the basis of the subtitle superimposition position data, display area information, and depth meta information, and then the depth/parallax conversion unit 214 converting the subtitle depth chi. However, when displaying the default view, the subtitle depth value and subtitle parallax value sent in addition to the subtitle data can also be used.

The operation of the service receiver 200 shown in Fig. 21 will be briefly described. The reception unit 202 receives the MP4 distribution stream STM transmitted from the service transmission system 100 on a broadcast wave or a network packet. The distribution stream STM is supplied to the container decoder 203.

The container decoder 203 extracts the video stream from the MP4 stream including the video stream, and sends the extracted video stream to the video decoder 204. Furthermore, the container decoder 203 extracts information on a "moov" block and the like from the MP4 stream including the video stream, and sends the information to the control unit 201.

Furthermore, the container decoder 203 extracts the subtitle stream from the MP4 stream including the subtitle stream, and sends the subtitle stream to the subtitle decoder 205. The subtitle decoder 205 performs decoding processing on the subtitle stream to obtain the subtitle data, obtains subtitle display data and subtitle superimposition position data from the subtitle data, and sends the subtitle display data and subtitle superimposition position data to the renderer 207.

Furthermore, when the reception unit 202 receives the MP4 stream including the timed metadata stream, the container decoder 203 extracts the timed metadata stream from the MP4 stream, extracts the depth meta information included in the timed metadata stream, and sends the depth meta information to the control unit 201.

The video decoder 204 performs decoding processing on the video stream to obtain image data of the left-eye and right-eye projection image, and supplies the image data to the renderer 207. Furthermore, the video decoder 204 extracts the parameter set and SEI message inserted in the video stream, and sends the parameter set and SEI message to the control unit 201. In a case where the depth meta information is inserted in the video stream and sent, the SEI message including the depth meta information is also included.

The graphics generation unit 206 generates the graphics display data and graphics superimposition position data related to graphics including OSD, application, EPG, and the like, and supplies the data to the renderer 207.

The renderer 207 generates left-eye and right-eye image data for displaying a three-dimensional image (stereoscopic image) on which subtitles and graphics are superimposed on the basis of image data of the left-eye and right-eye projection image, subtitle display data and subtitle superimposition position data from the subtitle decoder 205, and graphics display data and graphics superimposition position data from the graphics generation unit 206. In this case, under the control of the control unit 201, the display area is changed interactively in response to the posture and operation of the user.

The left-eye and right-eye image data for displaying the three-dimensional image obtained by the renderer 207 is supplied to the scaling unit 208. The scaling unit 208 performs scaling so as to match the display size of the display unit 209. The display unit 209 displays the three-dimensional image (stereoscopic image) whose display region is changed interactively on the basis of the left-eye and right-eye image data that has undergone the scaling processing.

As described above, in the transmission-reception system 10 shown in Fig. 1, when superimposing the superimposition information display data (subtitles and graphics) on the left-eye and right-eye display area image data, the service receiver 200 controls parallax to give on the basis of the depth meta information including the position information and representative depth value of the predetermined number of angle areas in the wide viewing angle image. Therefore, depth control when superimposing and displaying the superimposition information by using the depth information that is efficiently transmitted can be easily implemented.

Furthermore, in the transmission-reception system 10 shown in Fig. 1, the service transmission system 100 transmits the video stream obtained by encoding the image data of the wide viewing angle image for each of the left-eye and right-eye pictures, and depth meta information including position information and representative depth value for the predetermined number of angle areas in the wide viewing angle image for each picture. Therefore, depth information in the wide viewing angle image can be efficiently transmitted.

<2. Modification>

Note that the above-described embodiment has shown an example in which the container is MP4 (ISOBMFF). However, the present technology is not limited to the MP4 container, and is similarly applicable to containers of other formats such as MPEG-2 TS or MMT.

Furthermore, in the description of the above-described embodiment, it is assumed that the format type of projection image is equirectangular (see Figs. 3 and 5). As described above, the format type of projection image is not limited to equirectangular, but may be another format.

Furthermore, the present technology can also have the following configurations.

(1) A reception device including:

a reception unit configured to receive a video stream obtained by encoding image data of a wide viewing angle image for each of left-eye and right-eye pictures, and depth meta information including position information and a representative depth value of a predetermined number of angle areas in the wide viewing angle image for each of the pictures; and

a processing unit configured to extract left-eye and right-eye display area image data from the image data of the wide viewing angle image for each of the left-eye and right-eye pictures obtained by decoding the video stream and to superimpose superimposition information data on the left-eye and right-eye display area image data for output,

in which when superimposing the superimposition information data on the left-eye and right-eye display area image data, the processing unit gives parallax to the superimposition information data to be superimposed on each of the left-eye and right-eye display area image data on the basis of the depth meta information.

(2) The reception device according to (1) described above, in which
the reception unit receives the depth meta information for each of the pictures by using a timed metadata stream associated with the video stream.
(3) The reception device according to (1) described above, in which
the reception unit receives the depth meta information for each of the pictures in a state of being inserted into the video stream.
(4) The reception device according to any one of (1) to (3) described above, in which
when superimposing the superimposition information data on the left-eye and right-eye display area image data, the processing unit gives the parallax on the basis of a minimum value of the representative depth value of the predetermined number of angle areas corresponding to a superimposition range, the representative depth value being included in the depth meta information.
(5) The reception device according to any one of (2) to (3) described above, in which
the depth meta information further includes position information indicating which position in the areas the representative depth value of the predetermined number of angle areas relates to, and
when superimposing the superimposition information data on the left-eye and right-eye display area image data, the processing unit gives the parallax on the basis of the representative depth value of the predetermined number of areas corresponding to a superimposition range and the position information included in the depth meta information.
(6) The reception device according to any one of (1) to (5) described above, in which
the position information on the angle areas is given as offset information based on a position of a predetermined viewpoint.
(7) The reception device according to any one of (1) to (6) described above, in which
the depth meta information further includes a depth value corresponding to depth of a screen as a reference for the depth value.
(8) The reception device according to any one of (1) to (7) described above, in which
the superimposition information includes subtitles and/or graphics.
(9) The reception device according to any one of (1) to (8) described above, further including
a display unit configured to display a three-dimensional image on the basis of the left-eye and right-eye display area image data on which the superimposition information data is superimposed.
(10) The reception device according to (9) described above, in which
the display unit includes a head mounted display.
(11) A reception method including:

receiving a video stream obtained by encoding image data of a wide viewing angle image for each of left-eye and right-eye pictures, and depth meta information including position information and a representative depth value of a predetermined number of angle areas in the wide viewing angle image for each of the pictures; and extracting left-eye and right-eye display area image data from the image data of the wide viewing angle image for each of the left-eye and right-eye pictures obtained by decoding the video stream and superimposing superimposition information data on the left-eye and right-eye display area image data for output,

in which when superimposing the superimposition information data on the left-eye and right-eye display area image data, parallax is given to the superimposition information data to be superimposed on each of the left-eye and right-eye display area image data on the basis of the depth meta information.

(12) The reception method according to (11) described above, in which
the depth meta information for each of the pictures is received by using a timed metadata stream associated with the video stream.
(13) The reception method according to (11) described above, in which

the depth meta information for each of the pictures is received in a state of being inserted into the video stream.

(14) The reception method according to any one of (11) to (13) described above, in which

when superimposing the superimposition information data on the left-eye and right-eye display area image data, the parallax is given on the basis of a minimum value of the representative depth value of the predetermined number of angle areas corresponding to a superimposition range, the representative depth value being included in the depth meta information.

(15) The reception method according to any one of (11) to (14) described above, in which

the depth meta information further includes position information indicating which position in the areas the representative depth value of the predetermined number of angle areas relates to, and

when superimposing the superimposition information data on the left-eye and right-eye display area image data, the parallax is given on the basis of the representative depth value of the predetermined number of areas corresponding to a superimposition range and the position information included in the depth meta information.

(16) The reception method according to any one of (11) to (15) described above, in which

the position information on the angle areas is given as offset information based on a position of a predetermined viewpoint.

(17) The reception method according to claim 11, in which

the depth meta information further includes a depth value corresponding to depth of a screen as a reference for the depth value.

(18) The reception method according to any one of (11) to (17) described above, in which

the superimposition information includes subtitles and/or graphics.

(19) A transmission device including:

a transmission unit configured to transmit a video stream obtained by encoding image data of a wide viewing angle image for each of left-eye and right-eye pictures and depth meta information for each of the pictures, in which the depth meta information includes position information and a representative depth value of a predetermined number of angle areas in the wide viewing angle image.

(20) A transmission method including:

transmitting a video stream obtained by encoding image data of a wide viewing angle image for each of left-eye and right-eye pictures and depth meta information for each of the pictures, in which the depth meta information includes position information and a representative depth value of a predetermined number of angle areas in the wide viewing angle image.

The major feature of the present technology is that when superimposing the superimposition information display data (subtitles and graphics) on the left-eye and right-eye display area image data, parallax is given on the basis of the depth meta information including the position information and the representative depth value of the predetermined number of angle areas in the wide viewing angle image, thereby making it possible to easily implement depth control when superimposing and displaying the superimposition information by using the depth information that is efficiently transmitted (see Figs. 21, 22, and 25).

REFERENCE SIGNS LIST

| | |
|---|---|
| 10 | Transmission-reception system |
| 100 | Service transmission system |
| 101 | Control unit |
| 101a | User operation unit |
| 102L | Left camera |
| 102R | Right camera |
| 103L, 103R | Planar packing unit |
| 104 | Video encoder |
| 105 | Depth generation unit |
| 106 | Depth meta information generation unit |
| 107 | Subtitle generation unit |
| 108 | Subtitle encoder |
| 109 | Container decoder |

110    Transmission unit
111    Depth sensor
200    Service receiver
201    Control unit
201a   UI unit
201b   Sensor unit
202    Reception unit
203    Container decoder
204    Video decoder
205    Subtitle decoder
206    Graphics generation unit
207    Renderer
208    Scaling unit
209    Display unit
211L   Left-eye image data generation unit
211R   Right-eye image data generation unit
212    Superimposition unit
213    Depth processing unit
214    Depth/parallax conversion unit

**Claims**

1.  A reception device comprising:

    a reception unit configured to receive a video stream obtained by encoding image data of a wide viewing angle image for each of left-eye and right-eye pictures, and depth meta information including position information and a representative depth value of a predetermined number of angle areas in the wide viewing angle image for each of the pictures; and
    a processing unit configured to extract left-eye and right-eye display area image data from the image data of the wide viewing angle image for each of the left-eye and right-eye pictures obtained by decoding the video stream and to superimpose superimposition information data on the left-eye and right-eye display area image data for output,
    wherein when superimposing the superimposition information data on the left-eye and right-eye display area image data, the processing unit gives parallax to the superimposition information data to be superimposed on each of the left-eye and right-eye display area image data on a basis of the depth meta information.

2.  The reception device according to claim 1, wherein
    the reception unit receives the depth meta information for each of the pictures by using a timed metadata stream associated with the video stream.

3.  The reception device according to claim 1, wherein
    the reception unit receives the depth meta information for each of the pictures in a state of being inserted into the video stream.

4.  The reception device according to claim 1, wherein
    when superimposing the superimposition information data on the left-eye and right-eye display area image data, the processing unit gives the parallax on a basis of a minimum value of the representative depth value of the predetermined number of angle areas corresponding to a superimposition range, the representative depth value being included in the depth meta information.

5.  The reception device according to claim 1, wherein
    the depth meta information further includes position information indicating which position in the areas the representative depth value of the predetermined number of angle areas relates to, and
    when superimposing the superimposition information data on the left-eye and right-eye display area image data, the processing unit gives the parallax on a basis of the representative depth value of the predetermined number of areas corresponding to a superimposition range and the position information included in the depth meta information.

**6.** The reception device according to claim 1, wherein
the position information on the angle areas is given as offset information based on a position of a predetermined viewpoint.

**7.** The reception device according to claim 1, wherein
the depth meta information further includes a depth value corresponding to depth of a screen as a reference for the depth value.

**8.** The reception device according to claim 1, wherein
the superimposition information includes subtitles and/or graphics.

**9.** The reception device according to claim 1, further comprising
a display unit configured to display a three-dimensional image on a basis of the left-eye and right-eye display area image data on which the superimposition information data is superimposed.

**10.** The reception device according to claim 9, wherein the display unit includes a head mounted display.

**11.** A reception method comprising:

receiving a video stream obtained by encoding image data of a wide viewing angle image for each of left-eye and right-eye pictures, and depth meta information including position information and a representative depth value of a predetermined number of angle areas in the wide viewing angle image for each of the pictures; and extracting left-eye and right-eye display area image data from the image data of the wide viewing angle image for each of the left-eye and right-eye pictures obtained by decoding the video stream and superimposing superimposition information data on the left-eye and right-eye display area image data for output,
wherein when superimposing the superimposition information data on the left-eye and right-eye display area image data, parallax is given to the superimposition information data to be superimposed on each of the left- eye and right-eye display area image data on a basis of the depth meta information.

**12.** The reception method according to claim 11, wherein
the depth meta information for each of the pictures is received by using a timed metadata stream associated with the video stream.

**13.** The reception method according to claim 11, wherein
the depth meta information for each of the pictures is received in a state of being inserted into the video stream.

**14.** The reception method according to claim 11, wherein
when superimposing the superimposition information data on the left-eye and right-eye display area image data, the parallax is given on a basis of a minimum value of the representative depth value of the predetermined number of angle areas corresponding to a superimposition range, the representative depth value being included in the depth meta information.

**15.** The reception method according to claim 11, wherein
the depth meta information further includes position information indicating which position in the areas the representative depth value of the predetermined number of angle areas relates to, and
when superimposing the superimposition information data on the left-eye and right-eye display area image data, the parallax is given on a basis of the representative depth value of the predetermined number of areas corresponding to a superimposition range and the position information included in the depth meta information.

**16.** The reception method according to claim 11, wherein
the position information on the angle areas is given as offset information based on a position of a predetermined viewpoint.

**17.** The reception method according to claim 11, wherein
the depth meta information further includes a depth value corresponding to depth of a screen as a reference for the depth value.

**18.** The reception method according to claim 11, wherein

the superimposition information includes subtitles and/or graphics.

19. A transmission device comprising:

a transmission unit configured to transmit a video stream obtained by encoding image data of a wide viewing angle image for each of left-eye and right-eye pictures and depth meta information for each of the pictures, wherein the depth meta information includes position information and a representative depth value of a predetermined number of angle areas in the wide viewing angle image.

20. A transmission method comprising:

transmitting a video stream obtained by encoding image data of a wide viewing angle image for each of left-eye and right-eye pictures and depth meta information for each of the pictures, wherein the depth meta information includes position information and a representative depth value of a predetermined number of angle areas in the wide viewing angle image.

*FIG. 1*

<u>10</u>

100

SERVICE
TRANSMISSION
SYSTEM

DASH/MP4 →

200

SERVICE
RECEIVER

# FIG. 2

EP 3 783 887 A1

# FIG. 3

(a)

REAR IMAGE            FRONT IMAGE

(b)

equirectangle

(c)

Scaled equirectangle

EP 3 783 887 A1

# FIG. 4

| Syntax | No. of Bits | Format |
|---|---|---|
| seq_parameter_set_rbsp(){ | | |
|   seq_video_parameter_set_id | | |
|   seq_max_sub_layers_minus1 | | |
|   : | | |
|   pic_width_in_luma_samples | | uimsbf |
|   pic_height_in_luma_samples | | uimsbf |
|   : | | |
|   vui_parameters( ) { | | |
|     : | | |
|     default_display_window_flag | | lsmbf |
|     if( default_display_window_flag ) { | | |
|       def_disp_win_left_offset | | uimsbf |
|       def_disp_win_right_offset | | uimsbf |
|       def_disp_win_top_offset | | uimsbf |
|       def_disp_win_bottom_offset | | uimsbf |
|     } | | |
|     : | | |
|   } | | |
| } | | |

## FIG. 5

PROJECTION IMAGE

default_display_window

(0,0)

projection_pic_size_vertical

O(p,q)

REFERENCE POINT
RP(x,y)

projection_pic_size_horizontal

Default view

# FIG. 6

Rendering_metadata

| Syntax | No. of Bits | Format |
|---|---|---|
| Rendering_metadata( ) { | | |
| rendering_metadata_id | 16 | uimsbf |
| rendering_metadata_length | 16 | uimsbf |
| start_offset_sphere_latitude | 16 | uimsbf |
| start_offset_sphere_longitude | 16 | tcimsbf |
| end_offset_sphere_latitude | 16 | uimsbf |
| end_offset_sphere_longitude | 16 | tcimsbf |
| projection_pic_size_horizontal | 16 | uimsbf |
| projection_pic_size_vertical | 16 | uimsbf |
| scaling_ratio_horizontal | 16 | uimsbf |
| scaling_ratio_vertical | 16 | uimsbf |
| reference_point_horizontal | 16 | uimsbf |
| reference_point_vertical | 16 | uimsbf |
| format_type | 5 | uimsbf |
| backwardcompatible | 1 | bslbf |
| reserved | 2 | bslbf |
| } | | |

# FIG. 7

(a)

**Sphere surface**

Start_offset_sphere_longitude

Start_offset_sphere_latitude

end_offset_
sphere_longitude

end_offset_sphere_latitude

(b)

**Projection picture**

(0,0)

DESIGNATE REFERENCE POINT RP
TO BE CENTER OF DEFAULT VIEW

RP(x,y)
+

projection_pic_size_
vertical

projection_pic_size_horizontal

# FIG. 8

Semantics

| | |
|---|---|
| rendering_metadata_id (16bits) | ID FOR IDENTIFYING rendering_metadata STRUCTURE |
| rendering_metadata_length (16bits) | BYTE SIZE OF rendering_metadata STRUCTURE |
| start_offset_sphere_latitude (16bits) | LATITUDE OF CUTOUT START OFFSET FROM SPHERE (VERTICAL DIRECTION) |
| start_offset_sphere_longitude (16bits) | LONGITUDE OF CUTOUT START OFFSET FROM SPHERE (HORIZONTAL DIRECTION) |
| end_offset_sphere_latitude (16bits) | LATITUDE OF CUTOUT END OFFSET FROM SPHERE (VERTICAL DIRECTION) |
| end_offset_sphere_longitude (16bits) | LONGITUDE OF CUTOUT END OFFSET FROM SPHERE (HORIZONTAL DIRECTION) |
| projection_pic_size_horizontal (16bits) | HORIZONTAL PIXEL COUNT FROM top-left WITH projection picture SIZE |
| projection_pic_size_vertical (16bits) | VERTICAL PIXEL COUNT FROM top-left WITH projection picture SIZE |
| scaling_ratio_horizontal (16bits) | HORIZONTAL SCALING RATIO FROM ORIGINAL SIZE OF projection picture |
| scaling_ratio_vertical (16bits) | VERTICAL SCALING RATIO FROM ORIGINAL SIZE OF projection picture |
| reference_point_horizontal (16bits) | HORIZONTAL PIXEL POSITION OF REFERENCE POINT OF projection picture |
| reference_point_vertical (16bits) | VERTICAL PIXEL POSITION OF REFERENCE POINT OF projection picture |
| format_type (5bits) | FORMAT TYPE OF projection picture<br>0:  equirectangular<br>1:  cross-cubic<br>2:  partitioned cross cubic<br>others  reserved |
| backwardcompatible (1bit) | INDICATE WHETHER OR NOT BACKWARD COMPATIBILITY IS SET<br>0:  BACKWARD COMPATIBILITY IS NOT SET<br>1:  BACKWARD COMPATIBILITY IS SET |

EP 3 783 887 A1

# FIG. 9

DISPLAY GRAPHICS

DEPTH DIRECTION

$\theta2$

$\theta0 - \theta2$ : PARALLAX ANGLE IN SAME SIDE DIRECTION

$\theta0 - \theta1$ : PARALLAX ANGLE IN CROSSING DIRECTION

PARALLAX PLUS VALUE

S

PARALLAX MINUS VALUE

SCREEN

$\theta0$

FORWARD DIRECTION

○ FOR RIGHT-EYE DISPLAY

● FOR LEFT-EYE DISPLAY

IMAGE

D

$\theta1$

K

A B C

GRAPHICS

LEFT EYE    E    RIGHT EYE

EP 3 783 887 A1

# FIG. 10

IN CASE WHERE ANGLE AREA AR
INCLUDES EQUALLY SPACED DIVIDED AREAS

(a)

| AR1 | AR2 | AR3 |
|-----|-----|-----|
| AR4 | AR5 | AR6 |
| AR7 | AR8 | AR9 |

IN CASE WHERE ANGLE AREA AR
INCLUDES DIVIDED AREAS WITH FLEXIBLE SIZES

(b)

| AR1 | AR2 | AR3 |
|-----|-----|-----|
|     | AR4 |     |
| AR5 | | |
| AR6 | | |

# FIG. 11

Depthmap

ARi

dv(j,k)

k

j

# FIG. 12

(a)
Left View

(b)
Right View

# FIG. 13

# FIG. 14

Syntax of component_descriptor

(a)

| Syntax | No. of Bits | Format |
|---|---|---|
| component_descriptor() { | | |
|     descriptor_tag | 8 | uimsbf |
|     descriptor_length | 8 | uimsbf |
|     stream_content_ext | 4 | uimsbf |
|     stream_content | 4 | uimsbf |
|     component_type | 8 | uimsbf |
|     component_tag | 8 | uimsbf |
|     ISO_639_language_code | 24 | bslbf |
|     for (i=0;i<N;i++){ | | |
|         text_char | 8 | uimsbf |
|     } | | |
| } | | |

(b)

| | |
|---|---|
| stream_content_ext | INDICATE DETAILS OF ENCODING BY BEING USED IN COMBINATION WITH stream_content |
| stream_content | ENCODING METHOD OF VIDEO, AUDIO, AND SUBTITLE |
| component_type | VARIATION IN EACH ENCODING METHOD |

EP 3 783 887 A1

# FIG. 15

MPD

ISOBMFF
VIDEO TRACK    RANDOM ACCESS PERIOD

| is | styp | sidx | ssix | moof | mdat |

video

| VPS | SPS | PPS | PSEI | SSEI | SLICE |

TIMED METADATA TRACK
RANDOM ACCESS PERIOD

| is | styp | sidx | ssix | moof | mdat |

TimedMetadata

EP 3 783 887 A1

# FIG. 16

```
class PsvpSampleEntry() extends SphereRegionSampleEntry('psvp') {
        PsvpInfoBox();
}
class PsvpInfoBox extends FullBox('rvif', 0, 0) {
   unsigned int(8)  number_of_viewpoints ;
   for ( j = 0; j <  number_of_viewpoints ; j++ ) {
      unsigned int(8)   viewpoint_id ;
      unsigned int(16)  center_azimuth[j] ;
      unsigned int(16)  center_elevation[j] ;
      unsigned int(16)  center_tilt[j] ;
      unsigned int(8)   number_of_depth_sets ;
      for( k = 0; k <  number_of_depth_sets ; k++ ){
            unsigned int(16)  angle_tl_horizontal ;
            unsigned int(16)  angle_tl_vertical ;
            unsigned int(16)  angle_br_horizontal ;
            unsigned int(16)  angle_br_vertical ;
            unsigned int(16)  depth_reference ;
            unsigned int(16)  depth_representative_position_horizontal ;
            unsigned int(16)  depth_representative_position_vertical;
            unsigned int(16)  depth_representative ;
      }
   }
}
```

# FIG. 17

semantics

| | |
|---|---|
| number_of_viewpoints (8bits) | NUMBER OF viewpoints |
| viewpoint_id(8bits) | IDENTIFICATION NUMBER OF viewpoint |
| center_azimuth (16bits) | INDICATE AZIMUTH ANGLE OF view CENTER POSITION |
| center_elevation (16bits) | INDICATE ELEVATION ANGLE OF view CENTER POSITION |
| center_tilt (16bits) | INDICATE TILT ANGLE OF view CENTER POSITION |
| number_of_depth_sets (8bits) | INDICATE NUMBER OF DEPTH SETS |
| angle_tl_horizontal (16bits) | INDICATE HORIZONTAL POSITION INDICATING UPPER LEFT CORNER OF TARGET AREA AS OFFSET ANGLE FROM viewpoint |
| angle_tl_vertical (16bits) | INDICATE VERTICAL POSITION INDICATING UPPER LEFT CORNER OF TARGET AREA AS OFFSET ANGLE FROM viewpoint |
| angle_br_horizontal (16bits) | INDICATE HORIZONTAL POSITION INDICATING LOWER RIGHT CORNER OF TARGET AREA AS OFFSET ANGLE FROM viewpoint |
| angle_br_vertical (16bits) | INDICATE VERTICAL POSITION INDICATING LOWER RIGHT CORNER OF TARGET AREA AS OFFSET ANGLE FROM viewpoint |
| depth_reference (16bits) | REFERENCE OF DEPTH VALUE |
| depth_representative_position_horizontal | INDICATE HORIZONTAL POSITION OF POSITION CORRESPONDING TO REPRESENTATIVE DEPTH VALUE AS OFFSET ANGLE FROM viewpoint |
| depth_representative_position_vertical | INDICATE VERTICAL POSITION OF POSITION CORRESPONDING TO REPRESENTATIVE DEPTH VALUE AS OFFSET ANGLE FROM viewpoint |
| depth_representative (16bits) | REPRESENTATIVE DEPTH VALUE |

EP 3 783 887 A1

## FIG. 18

```
<MPD>
  xmlns="urn:mpeg:dash:schema:mpd:2011" xmlns:omaf="urn:mpeg:mpegI:omaf:2017"
  type="static"
  mediaPresentationDuration="PT10S"
  minBufferTime="PT1S"
  profiles="urn:mpeg:dash:profile:isoff-on-demand:2011">

  <Period>
    <!—Omnidirectional video -->
    <AdaptationSet segmentAlignment="true" subsegmentAlignment="true" subsegmentStartsWithSAP="1">
      <Representation id="360-video" mimeType='video/mp4 profiles="hevi"' codecs="resv.podv+erpv.hvc1.2.L153.B0"
            width="3840" height="2160" bandwidth="30000000" startWithSAP="1">
        <EssentialProperty schemeIdUri="urn:mpeg:mpegI:omaf:2017:pf"
          omaf:projection_type="0"/>
        <BaseURL> full_sphere_erp.mp4</BaseURL>
      </Representation>
    </AdaptationSet>

    <!—Preset viewpoints -->
    <AdaptationSet segmentAlignment="true" subsegmentAlignment="true" subsegmentStartsWithSAP="1">
      <Representation id="preset-viewpoints" associationId="360-video" associationType="cdsc" codecs="psvp" bandwidth="100">
        <BaseURL>preset-viewpoints.mp4</BaseURL>
      </Representation>
    </AdaptationSet>
  </Period>
</MPD>
```

EP 3 783 887 A1

## FIG. 19

| Syntax | Size | Type |
|---|---|---|
| psvp(){ | | |
|    data_length | | |
|    number_of_viewpoints | 8 | uimsbf |
|     for ( j = 0; j < number_of_viewpoints ; j++ ) { | | |
|      viewpoint_id | 8 | uimsbf |
|      center_azimuth | 16 | uimsbf |
|      center_elevation | 16 | uimsbf |
|      center_tilt | 16 | uimsbf |
|      number_of_depth_sets | 8 | uimsbf |
|       for( k = 0; k < number_of_depth_sets ; k++ ){ | | |
|        angle_tl_horizontal | 16 | uimsbf |
|        angle_tl_vertical | 16 | uimsbf |
|        angle_br_horizontal | 16 | uimsbf |
|        angle_br_vertical | 16 | uimsbf |
|        depth_reference | 16 | uimsbf |
|        depth_representative_position_horizontal | 16 | uimsbf |
|        depth_representative_position_vertical | 16 | uimsbf |
|        depth_representative | 16 | uimsbf |
|       } | | |
|     } | | |
| } | | |

EP 3 783 887 A1

# FIG. 20

MPD

ISOBMFF

VIDEO TRACK   RANDOM ACCESS PERIOD

| is | styp | sidx | ssix | moof | mdat |

psvp

video

| SPS | VPS | PPS | PSEI | SSEI | SLICE |

FIG. 21

EP 3 783 887 A1

# FIG. 22

207

- LEFT-EYE IMAGE DATA GENERATION UNIT — 211L
- RIGHT-EYE IMAGE DATA GENERATION UNIT — 211R
- SUPERIMPOSITION UNIT — 212
- DEPTH PROCESSING UNIT — 213
- DEPTH/PARALLAX CONVERSION UNIT — 214

VPL, VL, VPR, VR, VLD, VRD

SUBTITLE DISPLAY DATA
SUBTITLE SUPERIMPOSITION POSITION DATA
GRAPHICS DISPLAY DATA
GRAPHICS SUPERIMPOSITION POSITION DATA
DISPLAY AREA INFORMATION
DEPTH META INFORMATION

# FIG. 23

PROJECTION IMAGE

DISPLAY AREA A
(WIDE AREA)

Viewpoint VP1

subtitles

DISPLAY AREA B
(NARROW AREA)

Viewpoint VP1

subtitles

EP 3 783 887 A1

# FIG. 24

EP 3 783 887 A1

(a)

(b)

DISPLAY AREA A

OB2

VP1

subtitles

OB1

Top View

LARGE

DEPTH VALUE

SMALL

Depth Curve

DISPLAY AREA B

OB2

VP1

subtitles

Depth Curve

LARGE

DEPTH VALUE

SMALL

SUBTITLE IS PLACED AT
SHIFTED POSITION BY
CORRESPONDING DEPTH VALUE
BETWEEN STEREO IMAGES

WHEN DISPLAY AREA B

WHEN DISPLAY AREA A

SUBTITLE SUPERIMPOSITION POSITION

# FIG. 25

EP 3 783 887 A1

VP1 x

AR1

AR2

VP2 x

AR3    AR4    AR5

far

TOP view

near

L0    L1    L2    L3    L4    L5    L6    L7

S1

S3

S2

D

P

DISPLAY AREA        SUBTITLE

# FIG. 26

(a)

PROJECTION IMAGE    DISPLAY AREA

AG_1    AG_2    AG_3

AG_2
REPRESENTATIVE
depth VALUE

PERIOD DURING
WHICH DEPTH IS FIXED

(b)

PROJECTION IMAGE    DISPLAY AREA

AG_1    AG_2    AG_3

AG_2
REPRESENTATIVE
depth VALUE

AG_3
REPRESENTATIVE
depth VALUE

PERIOD DURING
WHICH DEPTH
TRANSITIONS SMOOTHLY

(c)

PROJECTION IMAGE    DISPLAY AREA

AG_1    AG_2    AG_3

AG_3
REPRESENTATIVE
depth VALUE

PERIOD DURING
WHICH DEPTH IS FIXED

# FIG. 27

(a)

T1 → T2 → T3

(b)
WIDE-ANGLE DISPLAY
STANDARD DISPLAY

# FIG. 28

```
        ┌──────────────┐
        │    START     │─────ST1
        └──────────────┘
                │
                ▼
┌───────────────────────────────────┐
│      INPUT SUBTITLE SUPERIMPOSITION │
│ POSITION DATA, DISPLAY AREA INFORMATION, │───ST2
│      AND DEPTH META INFORMATION     │
└───────────────────────────────────┘
                │
                ▼
┌───────────────────────────────────┐
│      OBTAIN DEPTH VALUE DISTRIBUTION │───ST3
│           IN DISPLAY AREA           │
└───────────────────────────────────┘
                │
                ▼
┌───────────────────────────────────┐
│  SET MINIMUM DEPTH VALUE IN DISPLAY AREA │───ST4
│        AS SUBTITLE DEPTH VALUE      │
└───────────────────────────────────┘
                │
                ▼
        ┌──────────────┐
        │     END      │─────ST5
        └──────────────┘
```

## FIG. 29

EP 3 783 887 A1

VIDEO

| AR 0 | AR 1 | AR 2 | AR 3 |
| AR 4 | AR 5 | AR 6 | AR 7 |
| AR 8 | AR 9 | AR 10 | AR 11 |
| AR 12 | AR 13 | AR 14 | AR 15 |

SUBTITLE

DRAWING VIEWED
FROM ABOVE

VIDEO

SUBTITLE

GRAPHICS

**INTERNATIONAL SEARCH REPORT**

| International application No. |
| --- |
| PCT/JP2019/016232 |

A. CLASSIFICATION OF SUBJECT MATTER
Int.Cl. H04N13/178(2018.01)i,                H04N13/183(2018.01)i,
        H04N13/194(2018.01)i,                H04N13/271(2018.01)i,
        H04N13/344(2018.01)i, H04N13/361(2018.01)i
According to International Patent Classification (IPC) or to both national classification and IPC

B. FIELDS SEARCHED

Minimum documentation searched (classification system followed by classification symbols)
Int.Cl. H04N13/00, H04N19/597, G06T19/00

Documentation searched other than minimum documentation to the extent that such documents are included in the fields searched
| | |
| --- | --- |
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y | JP 9-27971 A (SHIMADZU CORPORATION) 28 January 1997, paragraphs [0001]-[0002], [0013], [0019]-[0021], fig. 1-4 (Family: none) | 1-20 |

☒ Further documents are listed in the continuation of Box C.     ☐ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 25 June 2019 (25.06.2019) | 09 July 2019 (09.07.2019) |

| Name and mailing address of the ISA/ | Authorized officer |
| --- | --- |
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

International application No.

PCT/JP2019/016232

C (Continuation).　DOCUMENTS CONSIDERED TO BE RELEVANT

| Category* | Citation of document, with indication, where appropriate, of the relevant passages | Relevant to claim No. |
|---|---|---|
| Y | WO 2011/001856 A1 (SONY CORP.) 06 January 2011, paragraphs [0025], [0030]-[0031], [0038]-[0040], [0045]-[0049], [0060], [0086], [0096]-[0109], [0126]-[0128], [0133], [0138], [0140], [0143], [0330], fig. 2, 8-9, 24-27, 35-36, & EP 2451170 A1, paragraphs [0025], [0030]-[0031], [0038]-[0040], [0045]-[0049], [0060], [0086], [0096]-[0109], [0126]-[0128], [0133], [0138], [0140], [0143], [0330], fig. 2, 8-9, 24-27, 35-36 & US 2011/0149034 A1 & CN 102210155 A & KR 10-2012-0029370 A | 1-20 |
| Y | WO 2013/105401 A1 (SONY CORP.) 18 July 2013, paragraphs [0040]-[0041], [0045]-[0047], [0116], [0135], fig. 4, 29 & EP 2672713 A1, paragraphs [0040]-[0041], [0045]-[0047], [0116], [0135], fig. 4, 29 & US 2014/0078248 A1 & CN 103416069 A | 4, 14 |
| Y | JP 2010-158009 A (SAMSUNG ELECTRONICS CO., LTD.) 15 July 2010, paragraphs [0022], [0035], [0047], fig. 1-2 & EP 2202992 A2, paragraphs [0022], [0035], [0047], fig. 1-2 & US 2010/0165081 A1 & CN 101771892 A & KR 10-2010-0076783 A | 7, 17 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013105401 A